# EUROPEAN PATENT SPECIFICATION

(11) **EP 1 710 601 B1**
(45) Date of publication and mention of the grant of the patent: **05.03.2008**
(21) Application number: 06005988.8
(22) Date of filing: 23.03.2006
(51) Int. Cl.: G01S 7/28, G01S 7/292, G01S 13/93

(54) **Pulse radar device**
Impulsradargerät
Dispositif de radiodétection par impulsions

(30) Priority: 31.03.2005 JP 2005104800
(43) Date of publication of application: 11.10.2006
(73) Proprietor: TDK Corporation, Tokyo 103-8272 (JP)
(72) Inventor: Ikeda, Hiroshi, c/o TDK Corporation, Tokyo 103-8272 (JP)
(74) Representative: Degwert, Hartmut

(56) References cited:
- DE-A1- 2 932 819
- US-A- 3 760 256
- US-A- 4 189 732
- US-A1- 2004 178 950

## Description

### BACKGROUND OF THE INVENTION

### 1. Field of the Invention

The present invention relates to a pulse radar device for detecting a measurement target by transmitting a transmitted pulse wave thereto.

### 2. Description of the Related Art

Conventionally a pulse radar device has been available which transmits a transmitted pulse wave to a measurement target and receives a reflected wave therefrom to thereby detect a distance thereto. This type of pulse radar device is installed in, for example, a vehicle to avoid its collision with an obstacle. In this case, power is supplied to the pulse radar device by matching an input voltage from a switching type of power source such as a vehicle battery or a cell.

A switching type is employed as DC power source for the pulse radar device owing to a request for compacting it. A switching type of switching power source converts an AC voltage or DC voltage into a high frequency AC voltage by using a switching pulse generated by a switching element such as an MOS-FET, exposing it to voltage conversion by use of a transformer, and rectifies it again to obtain a DC voltage. Since the switching power source converts a voltage into a high frequency AC voltage by using a switching pulse, the transformer which is subsequently exposed to voltage conversion can be compacted. Therefore, a size of an entirety of the switching power source can be decreased. However, a pulse radar device employing a switching power source encounters a problem that it may malfunction due to noise caused by a switching pulse. For example, such a problem arises that an output voltage of a transmitted pulse wave from the pulse radar device may fluctuate due to a switching ripple included in an output voltage of the switching power source.

As a solution for this problem, an invention is disclosed for synchronizing a period of a pulse signal before being exposed to a frequency modulation with a switching pulse (see Japanese Patent Application Laid Open No. 11-212810, for example).

However, although the invention disclosed in Japanese Patent Application Laid Open No. 11-212810 can suppress fluctuations in output voltage of a transmitted pulse wave, it cannot suppress an influence of high frequency noise which is added, due to a switching pulse, to an output voltage or an output current from a switching power source. Accordingly, this high frequency noise may cause a pulse radar device to malfunction. In particular, in the case of using a narrow transmitted pulse wave in order to detect a short-distance measurement target by using a vehicle-installed pulse radar device, the measurement target cannot accurately be detected because a reflected wave therefrom is embedded in high frequency noise.

On the other hand, a method of suppressing high frequency noise itself output from a switching power source, a method of mounting a filter composed of large-capacity capacitors and inductors to an output stage of the switching power source is available. However, a large capacity may cause a rush current due to the capacitor and an overshoot of voltage due to the inductor at the time of power application. Accordingly there is a risk of destroying a transistor or an IC used in a pulse radar device. It is therefore desired to prevent the pulse radar device from malfunctioning even in a condition where high frequency noise from the switching power source remains.

The German Patent Application DE 29 32 819 A1 discloses a circuitry for generating a supply voltage for a pulsing load. The pulses of the switched power supply and the period load impulses are arranged with respect to each other such that a flexible edge of the switching pulses of the switched power supply does not coincide with the period of the load impulses.

The U.S. Patent Application US 2004/0178950 A1 discloses a method of controlling a switching element in a switching regulator power supply of a radar. The method of controlling the switching element comprises only switching the switching element during predetermined time intervals, the predetermined time intervals advantageously being sample intervals of a pulse repetition interval of the radar. Thereby having knowledge of the time intervals the switching element is switching, being able to remove or diminish any influence the switching can have on the quality of received signals and subsequent processing of these signals.

The U.S. Patent 3,760,256 discloses a synchronous direct current (DC) power supply, which has the power supply unit input drive synchronized with the pulse repetition frequency of the amplifying or load circuit requiring the dc power for operation. This limits the occurrence of ripple components in the power supply output to the spectral positions of the pulse repetition frequency lines, eliminating ripple interference with signal processing in the load. An astable multivibrator is synchronized with the pulse repetition frequency generator output frequency. The multivibrator output is converted to a square wave, filtered, and processed to provide a fully rectified output voltage for coupling to the desired load circuit.

U.S. Patent 4,190,882 discloses a power supply arrangement wherein the switching frequency of the power supply arrangement is continuously varied in frequency at an appropriate rate and deviation with the result that a band of frequencies replaces the fundamental switching frequency of the power supply and all harmonics so that noise created by the switching frequency signal and the RF signal are then similarly diffused.

However, none of the above-mentioned prior art documents provides an easy-to-implement and precise short-distance radar device that could be supplied by a variably switching power supply.

### SUMMARY OF THE INVENTION

In view of the above, it is an object of the present invention to provide a pulse radar device that can effectively prevent itself from malfunctioning due to a high frequency noise caused by a switching pulse.

To achieve the above object, the inventor have taken notice of a fact that high frequency noise which is added to an output voltage from a switching power source is caused by an overshoot or an undershoot that occurs when a switching pulse is turned on or off. And then they completed a pulse radar device for detecting a measurement target by using a transmitted pulse wave which is transmitted and received in a period during which a switching pulse is in an on-state or an off-state except a predetermined period measured from rising edge or trailing edge of the switching pulse, during which predetermined period a high frequency noise has a large influence.

Specifically, according to the present invention, there is provided a pulse radar device including a radar module that includes a transmission unit which transmits a transmitted pulse wave obtained by modulating a transmitted pulse and a reception unit which receives a reflected wave of said transmitted pulse wave reflected by a measurement target and demodulates said reflected wave to thereby generate a received pulse, a switching power source which generates drive power for said radar module by switching DC power by turning a switching pulse on and off, and a control unit which controls operations of said radar module so that a process from transmission of said transmitted pulse wave to generation of said received pulse may be completed in a period during which said switching pulse is in an on-state except a predetermined period measured from rising edge of said switching pulse or a period during which said switching pulse is in an off-state except the predetermined period measured from trailing edge of said switching pulse.

On the rising edge or the trailing edge of a switching pulse, high frequency noise may be added to an output of a switching power source owing to ringing of the switching pulse. Accordingly, in the present invention, the transmission unit is prevented from being affected by high frequency noise when transmitting a transmitted pulse wave, by including the control unit for controlling operations of said radar module so that a process from transmission of the transmitted pulse wave to generation of a received pulse may be completed in a period during which a switching pulse is in an on-state except a predetermined period measured from rising edge of the switching pulse or a period during which the switching pulse is in an off-state except the predetermined period measured from trailing edge of the switching pulse. Further, the reception unit is not also affected by high frequency noise because the reception unit will receive a transmitted pulse wave transmitted in a limited period when the switching pulse is in the on-state or the off-state, at a timing when the switching pulse is turned on or off, and output a received pulse. Therefore, a pulse radar device related to the present invention can be effectively prevented from malfunctioning due to high frequency noise caused by a switching pulse.

In the pulse radar device of the present invention, said radar module may further include a calculation unit which calculates value of at least one of a round-trip propagation time to said measurement target, a distance thereto, and a relative speed thereof based on a transmitted pulse wave transmitted from said transmission unit and a received pulse output from said reception unit.

In the pulse radar device of the present invention, a value of the round-trip propagation time, the distance, or the relative speed calculated by the calculation unit is calculated in the absence of the influence of high frequency noise caused by a switching pulse. Therefore, a highly accurate value can be obtained.

Further, in the pulse radar device of the present invention, preferably said control unit includes a timing generation circuit for generating a first timing signal that causes said radar module to operate periodically and a delay circuit which delays said first timing signal by at least a lapse of time that corresponds to an execution time of said radar module and outputs a delayed second timing signal so that said switching pulse in said switching power source may perform switching operations based on said second timing signal.

By providing the control unit with the timing generation circuit and the delay circuit so that the units in the radar module may operate and the switching pulse may perform switching operations, it is possible to control the switching operations of the switching pulse based on operations of the radar module.

Accordingly, the transmission unit, the reception unit, the calculation unit, and the switching pulse are all synchronized in operation timing, to improve certainty of operations of the pulse radar device. Therefore, the pulse radar device of the present invention can be effectively prevented from malfunctioning due to high frequency noise caused by the switching pulse.

Further, in the pulse radar device of the present invention, preferably said control unit includes a delay circuit for obtaining said switching pulse from said switching power source and delaying it by a predetermined lapse of time to thereby output a third timing signal and a radar control circuit for generating a fourth timing signal that causes said radar module to operate based on said third timing signal.

By providing the control unit with the delay circuit and the radar control circuit so that the units in the radar module may operate based on the switching pulse, the radar module can operate based on switching operations of the switching pulse. Accordingly, the switching pulse and the units in the radar module are all synchronized in operation timing, to improve the certainty of operations of the pulse radar device. Therefore, the pulse radar device of the present invention can be effectively prevented from malfunctioning due to high frequency noise caused by the switching pulse.

According to the present invention, it is possible to provide a pulse radar device that can be effectively prevented from malfunctioning due to high frequency noise caused by a switching pulse.

### BRIEF DESCRIPTION OF THE DRAWINGS

FIG. 1 is an explanatory block diagram of a first embodiment of a pulse radar device related to the present invention;
FIG. 2 is an explanatory block diagram of another example of the first embodiment of the pulse radar device related to the present invention;
FIG. 3 is an explanatory block diagram of a second embodiment of a pulse radar device related to the present invention;
FIG. 4 is an explanatory block diagram of another example of the second embodiment of the pulse radar device related to the present invention;
FIG. 5 is an explanatory block diagram of a third embodiment of a pulse radar device related to the present invention;
FIG. 6 is an explanatory block diagram of another example of the third embodiment of the pulse radar device related to the present invention;
FIG. 7 is a diagram showing one example of a configuration of a switching pulse generation circuit for generating a switching pulse;
FIG. 8 is an explanatory chart of one example of operations of the switching pulse generation circuit;
FIG. 9 is an explanatory chart of another example of the operations of the switching pulse generation circuit;
FIG. 10 is an explanatory chart of one example of operations of the pulse radar device related to the first embodiment;
FIG. 11 is an explanatory chart of one example of operations of another example of the pulse radar device related to the first embodiment;
FIG. 12 is an explanatory chart of one example of operations of the pulse radar device related to the second embodiment;
FIG. 13 is an explanatory chart of one example of operations of another example of the pulse radar device related to the second embodiment;
FIG. 14 is an explanatory chart of one example of operations of the pulse radar device related to the third embodiment; and
FIG. 15 is an explanatory chart of one example of operations of another example of the pulse radar device related to the third embodiment.

### DESCRIPTION OF THE PREFERRED EMBODIMENTS

The following will describe embodiments of the present invention with reference to drawings. However, the present invention is not limited to the following embodiments.

### (First Embodiment)

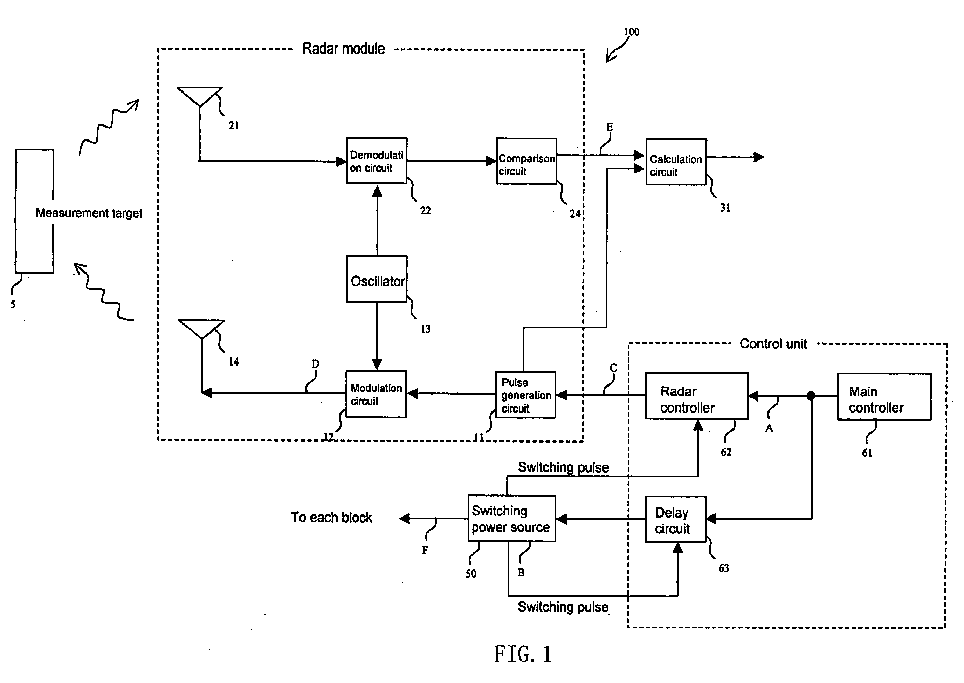

FIG. 1 is an explanatory block diagram of the first embodiment of a pulse radar device related to the present invention, showing a configuration of the pulse radar device. In FIG. 1, a reference numeral 11 indicates a pulse generation circuit for generating a transmitted pulse, a reference numeral 12 indicates a modulation circuit for modulating an amplitude of a transmitted pulse at a modulation frequency, a reference numeral 13 indicates an oscillator that oscillates at a modulation frequency, a reference numeral 14 indicates a transmitting antenna for transmitting a transmitted pulse wave, a reference numeral 21 indicates a receiving antenna for receiving a reflected wave from a measurement target 5, a reference numeral 22 indicates a demodulation circuit for demodulating a reflected wave, a reference numeral 24 indicates a comparison circuit for comparing a demodulated pulse from a demodulation circuit 22 to a predetermined threshold value to output a received pulse, a reference numeral 31 indicates a calculation circuit for calculating a value of at least one of a round-trip propagation time to the measurement target 5, a distance thereto, and a relative speed thereof, a reference numeral 50 indicates a switching power source for supplying power to units in a radar module, a reference numeral 61 indicates a main controller for outputting a reference signal having a predetermined frequency that provides a reference for operations of a pulse radar device 100, a reference numeral 62 indicates a radar controller for outputting a control signal that controls start and stop of operations of the units in the radar module based on the reference signal, and a reference numeral 63 indicates a delay circuit for delaying the reference signal by a predetermined lapse of time and outputting the signal.

A transmission unit includes the pulse generation circuit 11, the modulation circuit 12, the oscillator 13, and the transmitting antenna 14. A reception unit includes the receiving antenna 21, the demodulation circuit 22, the oscillator 13, and the comparison circuit 24. The calculation unit includes the calculation circuit 31. These transmission unit and reception unit are included in the radar module. A control unit includes the main controller 61, the radar controller 62, and the delay circuit 63, which act as a timing generation circuit.

First, a configuration of a transmission system of the pulse radar device 100 is described with reference to FIG. 1. The pulse generation circuit 11 generates a predetermined transmitted pulse. The transmitted pulse may be thus generated either periodically or non-periodically. Preferably an interval at which the transmitted pulse is generated may be set longer than a round-trip propagation time of a radio wave that corresponds to a maximum detectable distance of the pulse radar device 100. The modulation circuit 12 mixes a transmitted pulse from the pulse generation circuit 11 and a modulation wave from the oscillator 13 to thereby output a transmitted pulse wave. The transmitting antenna 14 serves to transmit a transmitted pulse wave from the modulation circuit 12. The transmitting antenna 14 may be composed of a plurality of antennas.

Further, a width of a transmitted pulse to be output from the pulse generation circuit 11 may be desirably not less than 1ns and not larger than 100ns. This pulse width range corresponds to a range of not less than 1ns and not larger than 100ns of a width of a transmitted pulse that determines a resolution since a distance to the measurement target 5 to be detected by the pulse radar device 100 is 15cm through 15m.

A frequency of a modulation signal from the oscillator 13 may be desirably 100GHz or less. A modulation frequency not less than 100GHz brings about a large in-the-air propagation loss, thereby decreasing a maximum detectable distance of the pulse radar device 100.

Next, a configuration of a reception system of the pulse radar device 100 is described with reference to FIG. 1. The receiving antenna 21 receives a wave reflected by the measurement target 5. The receiving antenna may also be composed of a plurality of antennas. It may further act as a transmitting antenna also. The demodulation circuit 22 demodulates the reflected wave from the receiving antenna 21 by using a demodulation signal from the oscillator 13 to thereby output a demodulated pulse. It is to be noted that the demodulated signal has the same frequency as that of the modulation signal. Further, the comparison circuit 24 shapes a waveform of an output from the demodulation circuit 22 by comparing the output to a reference voltage and outputs a resultant received pulse.

The calculation circuit 31 serving as the calculation unit calculates a value of at least one of a round-trip propagation time to the measurement target 5, a distance thereto, and a relative speed thereof based on a transmitted pulse wave transmitted from the transmission unit and a received pulse output from the reception unit. In the present embodiment, the calculation circuit 31 is configured to acquire a transmitted pulse from the pulse generation circuit 11 and a received pulse from the comparison circuit 24 respectively, to calculate a round-trip propagation time from a difference between an acquisition time of the transmitted pulse and that of the received pulse. Further, a distance to the measurement target 5 can be calculated as a value obtained by multiplying the above calculated round-trip propagation time and a propagation speed of the transmitted pulse wave and dividing a resultant product by 2 (two). On the other hand, a relative speed of the measurement target 5 can be calculated from a difference between a frequency of the transmitted pulse wave from the transmitting antenna 14 and a Doppler modulation frequency of a reflected wave from the measurement target 5. In the present embodiment, this difference in frequency is calculated from a difference between pulse width of a transmitted pulse acquired from the pulse generation circuit 11 and a received pulse acquired from the comparison circuit 24 respectively.

In the pulse radar device 100 related to the present embodiment, which will be described later, values of a round-trip propagation time, a distance, and a relative speed which are given by the calculation circuit 31 are calculated in the absence of an influence from high frequency noise caused by a switching pulse of the switching power source 50. Therefore, a highly accurate value can be obtained. Although the present embodiment has performed signal processing based on a transmission pulse wave and a received pulse output from the transmission unit and the reception unit respectively, for example, a signal of leakage of the transmitted pulse wave to the reception unit may be used in place of the transmitted pulse.

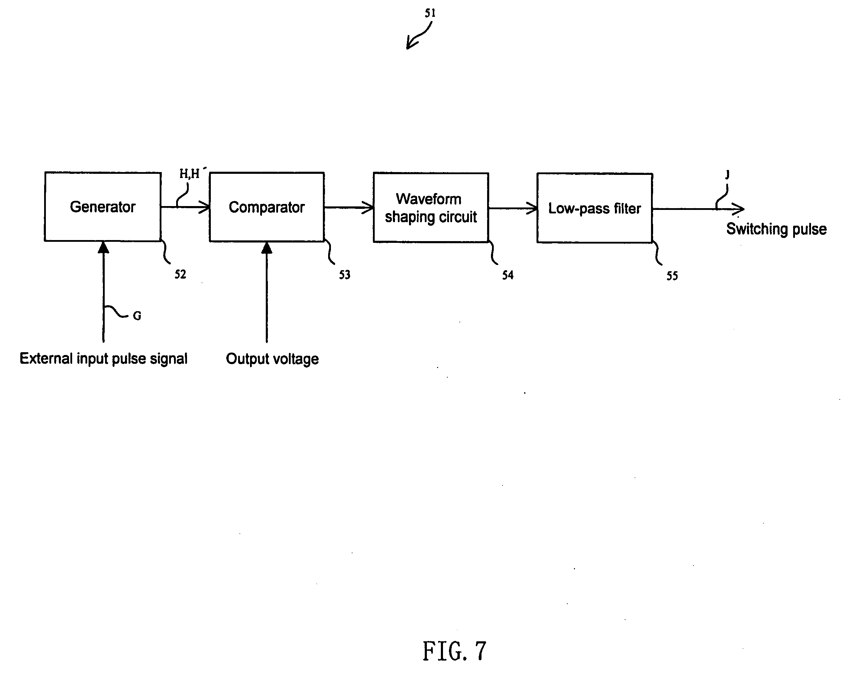

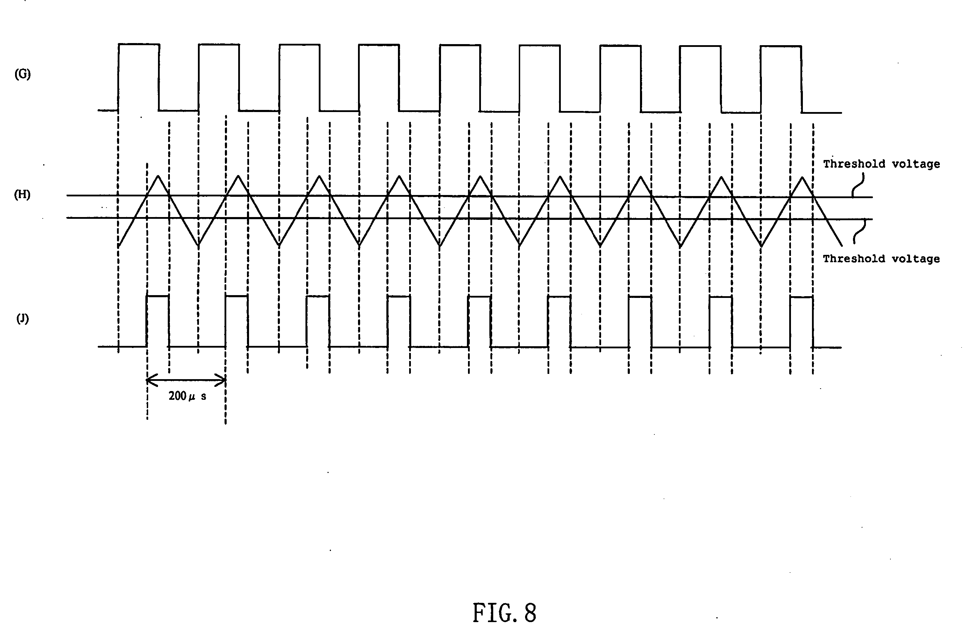

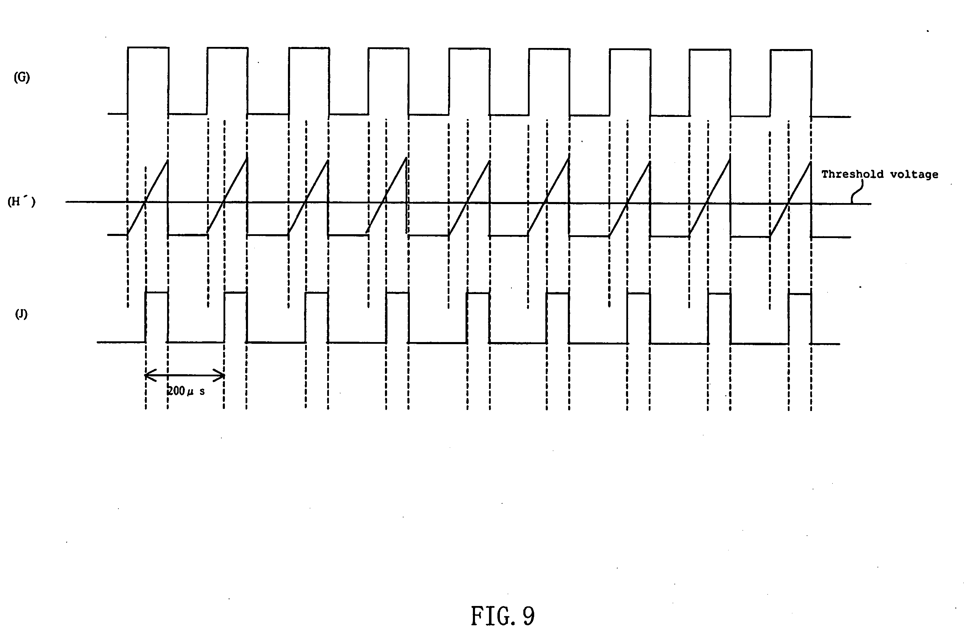

Next, a configuration of a power source system of the pulse radar device 100 is described with reference to FIG. 1. The switching power source 50 inputs a switching pulse to a switching transistor such as an MOS-FET and converting a frequency of DC power into a frequency with a high conversion efficiency at timing when the switching pulse is turned on and off, to generate power to be supplied to the radar module. The following will describe a configuration of a switching pulse generation circuit 51 that generates a switching pulse, with reference to FIG. 7. In FIG. 7, a reference numeral 52 indicates a generator for generating a triangular wave or a saw tooth wave, a reference numeral 53 indicates a comparator for comparing an output waveform from the generator 52 to a threshold voltage, a reference numeral 54 indicates a waveform shaping circuit for shaping a waveform of an output from the comparator 53, a reference numeral 55 indicates a low-pass filter for removing a high frequency component from an output signal from the waveform shaping circuit 54. The generator 52 generates a triangular wave or a saw tooth wave having a frequency that provides a reference for switching pulses. This generator 52 may be configured to either automatically oscillate a triangular wave or a saw tooth wave or generate a triangular or saw tooth wave synchronized with a pulse signal applied from an outside as in the case of the present embodiment. In the following, operations of the switching pulse generation circuit 51 shown in FIG. 7 are described with reference to FIGS. 8 and 9. FIGS. 8(G), 8(H), and 8(J) each show one example of a signal waveform that appears at points G, H, and J shown in FIG. 7 respectively. FIGS. 9(G), 9(H'), and 9(J) each show one example of a signal waveform that appears at points G, H', and J shown in FIG. 7 respectively. In the following description, the reference symbols shown in FIG. 7 are used appropriately.

FIGS. 8(G) and 9(G) each show a waveform of a pulse signal input to the generator from the outside. FIG. 8(H) shows a waveform of a triangular wave output from the generator. FIG. 9(H') shows a waveform of a saw tooth wave output from oscillation. Further, FIGS. 8(J) and 9(J) each show a waveform of a switching pulse which is output from the low-pass filter 55. The generator 52, for example, adjusts a bias voltage of an external input pulse signal and integrates it, to generate a triangular wave or a saw tooth wave shown in FIG. 8(H) or FIG. 9(H') respectively. This triangular wave or saw tooth wave is compared by the comparator 53 to the threshold voltage so that portions in excess of the threshold voltage may be cut off. In such a manner, a width of the switching pulse is determined. It is to be noted that in a case where the generator 52 generates a triangular wave, the comparator 53 functions as a window comparator that sets two threshold voltages at an upper part and a lower part of the triangular wave respectively as shown in FIG. 8(H).

The pulse width of the switching pulse may be either fixed or variable in order to stabilize an output voltage of the switching power source 50 by means of pulse width modulation (PWM) control. To provide a variable width of the switching pulse variable, for example, an output voltage of the switching power source can be fed back and input to the comparator 53 to thereby change a threshold voltage in the comparator 53 as shown in FIG. 7. A waveform obtained by cutting off a portion in excess of the threshold value as a result of comparison in the comparator 53 is shaped by the waveform shaping circuit 54 into a rectangular wave, which in turn passes through the low-pass filter 55 to have its high frequency noise removed and output as a switching pulse shown in FIG. 8(J) or 9(J).

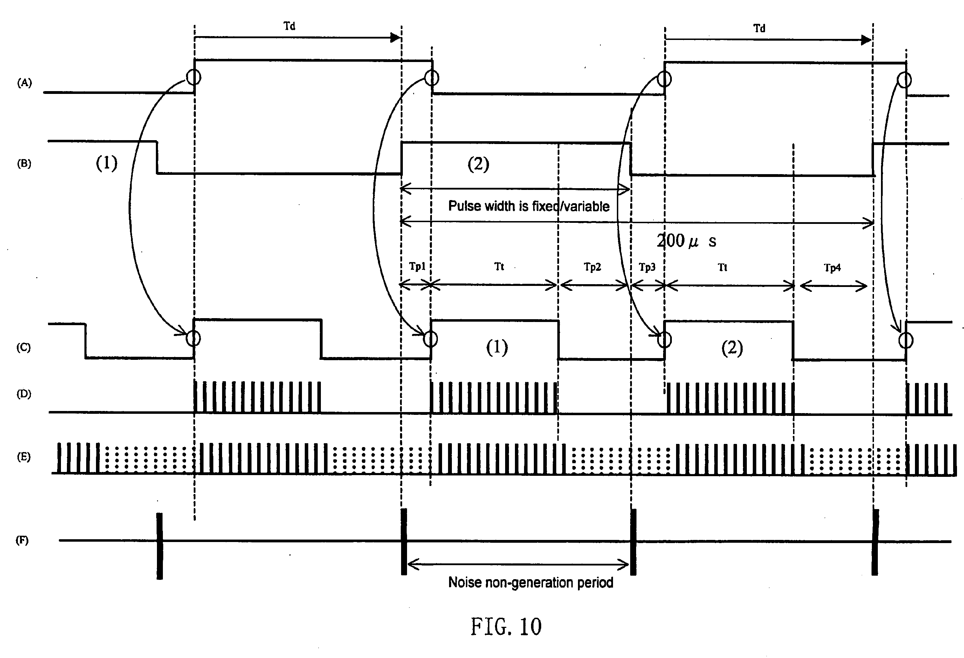

Next, a configuration of a control system of the pulse radar device 100 is described with reference to FIG. 1. The following will describe a mode in which the control unit controls operations of the transmission unit. The main controller 61 outputs a reference signal as a first timing signal for causing the transmission unit in the radar module to perform operations periodically at a predetermined frequency. The radar controller 62 generates the control signal from the reference signal from the main controller 61 and outputs it to the pulse generation circuit 11. The delay circuit 63, on the other hand, delays the reference signal from the main controller 61 by a predetermined lapse of time and outputs a resultant pulse signal as a second timing signal. This output, which corresponds to the external input pulse signal described with FIG. 7, causes the switching power source 50 to carry out the switching operation of the switching pulse therein. In the following, operations of the control unit are described with reference to FIG. 10, FIGS. 10(A), 10(B), 10(C), 10(D), 10(E), and 10(F) each show one example of a signal waveform that appears at points A, B, C, D, E, and F shown in FIG. 1 respectively. In the following description, the reference symbols shown in FIG. 1 are used appropriately.

FIG. 10(A) shows a timing for outputting the reference signal from the main controller 61. FIG. 10(B) shows a timing of a switching pulse generated inside the switching power source 50. The switching pulse is generated by inputting a pulse signal output from the delay circuit 63 to the generator 52 in the switching pulse generation circuit 51 described with FIG. 7. FIG. 10(C) shows a timing of the control signal controlling operations of the pulse generation circuit 11. FIG. 10(D) shows a timing of a transmitted pulse wave transmitted from the transmitting antenna 14. FIG. 10(E) shows a timing of a received pulse output from the comparison circuit 24. FIG. 10(F) shows a timing of occurrence of noise which is added to an output voltage provided by the switching power source 50.

As shown in FIG. 10(F), on the rising edge or the trailing edge of a switching pulse as shown in FIG. 10(B), high frequency noise is added to an output of the switching power source 50 owing to ringing of the switching pulse. The noise occurs like impulse roughly simultaneously with the rising edge or the falling edge. Accordingly, the control unit controls operations of the transmission unit so that a process from transmission of a transmitted pulse wave to generation of a received pulse may be completed in a period during which the switching pulse is in an on-state except a predetermined period Tp1 measured from the rising edge of the switching pulse or a period during which the switching pulse is in an off-state except the predetermined period Tp3 measured from the trailing edge of the switching pulse.

It is to be noted that a round-trip propagation time from transmission of the transmitted pulse wave from the transmitting antenna 14 to reception of a reflected wave by the receiving antenna 21 is determined on the basis of a distance to the measurement target 5. If the pulse radar device 100 is, for example, a vehicle-installed short-distance radar, a maximum detectable distance is 20m (40m for a round trip). Therefore, taking into account a propagation speed (3 × 10⁸m/s), a propagation delay time becomes about 133ns. On the other hand, an operating frequency of the switching pulse is several ten kHz through several hundred kHz and 1mHz at the maximum, so that a noise non-generation period between occurrence of noise and that of the next noise added by the output voltage of the switching power source 50 becomes 1µs at the minimum. Therefore, it is sufficiently possible to transmit a transmitted pulse wave and receive a reflected wave in the noise non-generation period of an output voltage of the switching power source 50.

In the present embodiment, operation control is conducted so that a transmitted pulse generated in the pulse generation circuit 11 may be output only in a transmission period Tt during which the control signal shown in FIG. 10(C) is in the on-state by raising this control signal in level only over the transmission period Tt in a noise non-generation period shown in FIG. 10(F). Further, before and after the transmission period Tt in timing, predetermined periods Tp1 and Tp2 are provided to pulse (1) respectively and predetermined periods Tp3 and Tp4 are provided to pulse (2) respectively in FIG. 10(C). Symbols Tp1 and Tp3 each indicate a predetermined period shown in FIG. 10(F) till the noise stops to influence on the radar module. On the other hand, there are some cases where the noise shown in FIG. 10(F) may be added to such a reflected wave of a transmitted pulse wave to be transmitted at the end of the transmission period Tt even if transmission of the transmitted pulse wave is completed within the noise non-generation period. This is because there is a difference in time between a transmission timing of a transmitted pulse wave and a reception timing of a reflected wave. To solve this problem, the predetermined periods Tp2 and Tp4 are provided so that a generation timing of the received pulse may also be completed within the noise non-generation period. Although the present embodiment has transmitted a transmitted pulse wave several times in the transmission period Tt, the transmitted pulse wave may be transmitted only once in the transmission period Tt.

By thus arranging the control unit, the transmission unit is kept free of an influence of high frequency noise when transmitting a transmitted pulse wave. Further, the reception unit is also kept free of an influence of high frequency noise because the reception unit receives and outputs, when a switching pulse is in the on-state or the off-state, a transmitted pulse wave that has been transmitted in a limited period when the switching pulse has been in the on-state or the off-state respectively. Therefore, the pulse radar device 100 related to the present embodiment can be effectively prevented from malfunctioning due to high frequency noise caused by a switching pulse.

In the present embodiment, to provide the predetermined periods Tp1 and Tp3, the control signal from the radar controller 62 is configured to rise as triggered by rising edge and trailing edge of the reference signal from the main controller 61 and, further, a pulse signal is configured to be output which is delayed through the delay circuit 63 with respect to the reference signal by at least as much as an execution time of the radar module, that is, a lapse of time that corresponds to the transmission period Tt (delayed by Td in FIG. 10). In the present embodiment, the delay time Td is determined so as to fall in a pulse width of the reference signal. Further, the predetermined periods Tp2 and Tp4 are provided by adjusting the transmission period Tt by using the radar controller 62.

It is to be noted that in a case where a pulse width of the switching pulse of FIG. 10(B) is fixed, the predetermined periods Tp1, Tp2, Tp3, and Tp4 are determined by adjusting the transmission period Tt so that it may fall in the pulse width of the switching pulse. On the other hand, in a case where the pulse width of the switching pulse is made variable by PWM control, when applying a saw tooth wave shown in FIG. 9(H') by using the switching pulse generation circuit 51 shown in FIG. 7, only a trailing time point of the switching pulse is fixed and a rising time point thereof is made variable based on the pulse width of the switching pulse. Further, when applying a triangular wave shown in FIG. 8(H) by using the switching pulse generation circuit 51 shown in FIG. 7, the rising time point and the trailing time point are both made variable based on the pulse width of the switching pulse. Therefore, in a case where PWM control is conducted on the switching power source 50, as shown in FIG. 1, a switching pulse is input from the switching power source 50 to the radar controller 62 and the delay circuit 63 to reflect a timing of the switching pulse on determination of the transmission period Tt of the control signal and determination of the delay time Td of the switching pulse. For example, based on a rising time point and a trailing time point of a previous switching pulse (pulse (1) of FIG. 10(B)), a rising time point and a trailing time point of the coming switching pulse (pulse (2) of FIG. 10(B)) are predicted to thereby determine the transmission period Tt and the delay time Td.

By causing the transmission unit in the radar module to operate by using the radar controller 62 and also causing the switching pulse to carry out a switching operation by using the delay circuit 63 under the control of the control unit as in the case of the present embodiment, it is possible to control a switching operation of the switching pulse with reference to an operation of the transmission unit in the radar module. Therefore, operation timings of the transmission unit and the switching pulse are all synchronized, to improve certainty of operations of the pulse radar device 100. Therefore, the pulse radar device 100 related to the present embodiment can be effectively prevented from malfunctioning due to high frequency noise caused by a switching pulse.

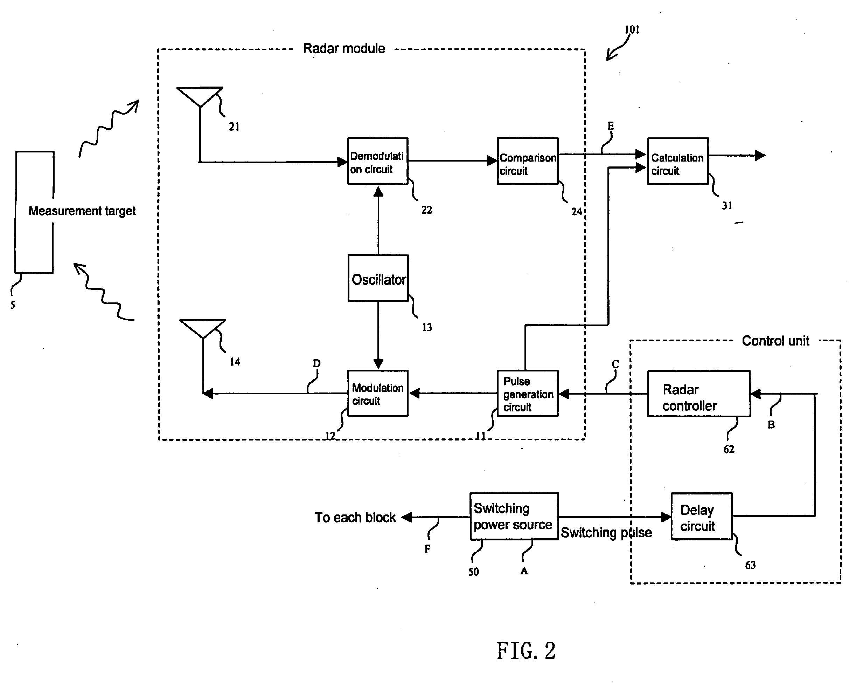

Next, another configuration of the control system of the pulse radar device 100 is described with reference to FIG. 2. The following will describe its form in which the control unit controls operations of the transmission unit. In FIG. 2, the same reference symbols indicate the same components as those of FIG. 1. In FIG, 2, the control unit includes the delay circuit 63 and the radar controller 62 as a radar control circuit.

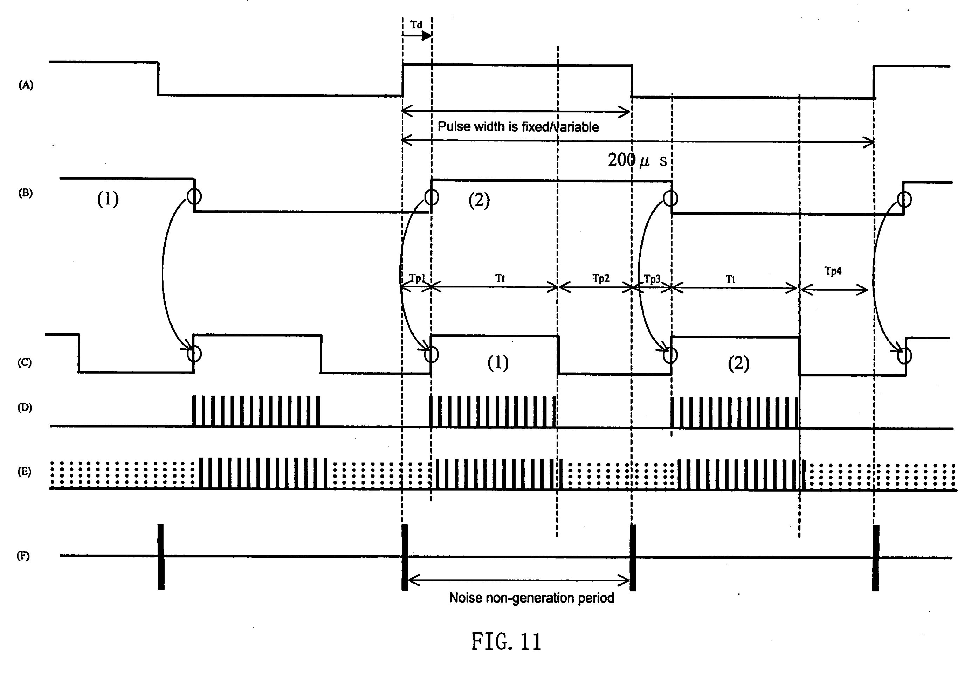

The switching power source 50 generates a switching pulse by using the switching pulse generation circuit 51 described with FIG. 7 and outputs the switching pulse to the outside. In this case, the switching pulse generation circuit 51 shown in FIG. 7 self-excitedly oscillates a triangular wave or a saw tooth wave by using the generator 52. The delay circuit 63 acquires the switching pulse from the switching power source 50, delays it by a predetermined lapse of time, and outputs a resultant pulse signal as a third timing signal. Further, the radar controller 62 as the radar control circuit generates the control signal as a fourth timing signal based on the pulse signal from the delay circuit 63 and outputs it to the pulse generation circuit 11. In the following, operations of the control unit are described with reference to FIG. 11, FIGS. 11(A), 11(B), 11(C), 11(D), 11(E), and 11(F) each show one example of a signal waveform that appears at points A, B, C, D, E, and F shown in FIG. 2 respectively. In the following description, the reference symbols shown in FIG. 2 are used appropriately.

FIG. 11(A) shows a timing of a switching pulse output from the switching power source 50. FIG. 11(B) shows a timing of a pulse signal output from the delay circuit 63. FIG. 11(C) shows a timing of the control signal controlling operations of the pulse generation circuit 11. FIG. 11(D) shows a timing of a transmitted pulse wave transmitted from the transmitting antenna 14. FIG. 11(E) shows a timing of a received pulse output from the comparison circuit 24. FIG. 11(F) shows a timing of occurrence of noise which is added to an output voltage provided by the switching power source 50.

In the same way as described with FIG. 10, the control unit controls the operations of the transmission unit so that a process from transmission of a transmitted pulse wave to generation of a received pulse may be completed in a period during which a switching pulse is in the on-state except the predetermined period Tp1 measured from rising edge of the switching pulse or a period during which the switching pulse is in the off-state except the predetermined period Tp3 measured from trailing edge of the switching pulse. Although the present embodiment has transmitted a transmitted pulse wave several times in the transmission period Tt, the transmitted pulse wave may be transmitted only once in the transmission period Tt.

In the present embodiment, to provide with the predetermined periods Tp1 and Tp3, a switching pulse from the switching power source 50 has been delayed through the delay circuit 63 by the predetermined delay time Td, and the control signal from the radar controller 62 is configured to rise as triggered by rising edge and trailing edge of the pulse signal from the delay circuit 63. Further, the predetermined periods Tp2 and Tp4 have been provided by adjusting the transmission period Tt by using the radar controller 62.

In such a manner, the control unit uses the delay circuit 63 and the radar controller 62 to operate the transmission unit in the radar module based on a switching pulse, thereby enabling operations of the radar module with reference to a switching operation of the switching pulse. Accordingly, the switching pulse and the transmission unit in the radar module are all synchronized in operation timing, to improve the certainty of operations of the pulse radar device 101. Therefore, a pulse radar device 101 related to the present embodiment can be effectively prevented from malfunctioning due to high frequency noise caused by the switching pulse. It is to be noted that in the present embodiment, since the operations of the transmission unit are controlled on the basis of a switching pulse, even if a width of the switching pulse is variable, a timing of the switching pulse can be reflected on determination of the delay time Td of the switching pulse and determination of the transmission period Tt of the control signal. For example, based on a rising time point and a trailing time point of a previous delayed switching pulse (pulse (1) of FIG. 11(B)), a rising time point and a trailing time point of the coming delayed switching pulse (pulse (2) of FIG. 11(B)) are predicted to thereby determine the transmission period Tt and the delay time Td.

The following will describe operations of the pulse radar devices 100 and 101 with reference to FIGS. 1, 2, 7, 10, and 11. In the following description, the reference symbols shown in FIGS. 1, 2, 7, 10, and 11 are used appropriately.

In the pulse radar device 100 shown in FIG. 1, first, when the switching power source 50 is powered, the switching power source 50 performs self-excited oscillation upon power application to supply power to an entirety of the pulse radar device 100. A reference signal output from the main controller 61 in the control unit thus supplied with power is delayed through the delay circuit 63 by the predetermined delay time Td (FIG. 10) and input to the switching power source 50. This delay time is determined so as to fall in a pulse width of the reference signal. Based on a pulse signal input to the switching pulse generation circuit 51 from the delay circuit 63, the switching power source 50 generates a switching pulse shown in FIG. 10(B) by the pulse signal input to the switching pulse generation circuit 51 from the delay circuit 63, thus operating.

On the other hand, the reference signal output from the main controller 61 is input to the radar controller 62. The radar controller 62 raises the control signal in level as shown in FIG. 10(C) as triggered by rising edge and trailing edge of the reference signal and outputs it by adjusting the transmission period Tt in such a manner that a process from transmission of a transmitted pulse wave to generation of a received pulse may be completed in a period during which the switching pulse is in the on-state except the predetermined period Tp1 measured from the rising of the switching pulse or a period during which the switching pulse is in the off-state except the predetermined period Tp3 measured from the trailing of the switching pulse. It is to be noted that in a case where a width of the switching pulse is variable, the transmission period Tt can be determined by predicting a rising time point and a trailing time point of a coming switching pulse (pulse (2) of FIG. 10(B)) based on a rising time point and a trailing time point of a previous switching pulse (pulse (1) of FIG. 10(B)).

On the other hand, in the pulse radar device 101 shown in FIG. 2, when the switching power source 50 is powered, the switching power source 50 performs self-excited oscillation upon power application to supply power to the entirety of the pulse radar device 101 through switching operation of a switching pulse generated by the switching pulse generation circuit 51. Also, the switching power source 50 outputs the switching pulse to the delay circuit 63. The switching pulse output from the switching power source 50 is delayed through the delay circuit 63 by the predetermined delay time Td (FIG. 11) and input to the radar controller 62.

The radar controller 62 raises the control signal in level as shown in FIG. 11(C) as triggered by rising edge and trailing edge of a pulse signal from the delay circuit 63 and outputs it by adjusting the transmission period Tt in such a manner that a process from transmission of a transmitted pulse wave to generation of a received pulse may be completed in a period during which the switching pulse is in the on-state except the predetermined period Tp1 measured from the rising of the switching pulse or a period during which the switching pulse is in the off-state except the predetermined period Tp3 measured from the trailing of the switching pulse. It is to be noted that in a case where a width of the switching pulse is variable, the transmission period Tt can be determined by predicting a rising time point and a trailing time point of a coming delayed switching pulse (pulse (2) of FIG. 11(B)) based on a rising time point and a trailing time point of a previous delayed switching pulse (pulse (1) of FIG. 11(B)).

By generating the control signal as in the case of the pulse radar device 100 or 101, the transmission unit is kept free of an influence of high frequency noise when transmitting a transmitted pulse wave. Further, the reception unit is also kept free of an influence of high frequency noise because the reception unit receives and outputs, when a switching pulse is in the on-state or the off-state, a transmitted pulse wave that has been transmitted in a limited period when the switching pulse has been in the on-state or the off-state respectively. Therefore, the pulse radar devices 100 and 101 related to the present embodiment can be effectively prevented from malfunctioning due to high frequency noise caused by a switching pulse.

The transmission unit uses the modulation circuit 12 to modulate a transmitted pulse generated by the pulse generation circuit 11 by using a modulation signal from the oscillator 13 and transmits it as a transmitted pulse wave to the measurement target 5 only when the control signal is in the on-state as shown in FIGS. 10D and 11D. It is to be noted that the pulse generation circuit 11 further outputs the transmitted pulse to the calculation circuit 31.

The transmitted pulse wave transmitted to the measurement target 5 is reflected by the measurement target 5 and received as a reflected wave by the receiving antenna 21. The reception unit has been waiting for reception since power application of the switching power source 50 and, when having received the reflected wave, uses the demodulation circuit 22 to demodulate the received reflected wave by using the demodulation signal from the oscillator 13 and outputs it. On the other hand, the reception unit uses the comparison circuit 24 to compare the pulse demodulated by the demodulation circuit 22 to the reference voltage so that its waveform may be shaped and outputs a resultant received pulse.

The transmitted pulse and the received pulse are acquired by the calculation circuit 31 in the absence of an influence of high frequency noise due to the switching pulse of the switching power source 50, so that it is possible to accurately calculate a value of at least one of a round-trip propagation time to the measurement target 5, a distance thereto, and a relative speed thereof with respect to the pulse radar device 100 or 101.

As described above, in the pulse radar devices 100 and 101, when a transmitted pulse wave is transmitted, the transmission unit is kept free of high frequency noise and the reception unit is also kept free of it. Further, in the pulse radar device 100, the control unit uses the radar controller 62 to operate the transmission unit in the radar module and also uses the delay circuit 63 to carry put the switching operation of a switching pulse, thereby enabling controlling switching operation of the switching pulse based on the operations of the transmission unit in the radar module. Accordingly, the transmission unit and the switching pulse are all synchronized in operation timing, to improve the certainty of the operations of the pulse radar device 100. On the other hand, in the pulse radar device 101, the control unit uses the delay circuit 63 and the radar controller 62 to operate the transmission unit in the radar module based on the switching pulse, thereby enabling controlling the operations of the radar module based on the switching operation of the switching pulse. Accordingly, the switching pulse and the transmission unit in the radar module are all synchronized in operation timing, to improve the certainty of the operations of the pulse radar device 101. Therefore, the pulse radar device 100 and 101 related to the present invention can be effectively prevented from malfunctioning due to high frequency noise caused by a switching pulse.

### (Second Embodiment)

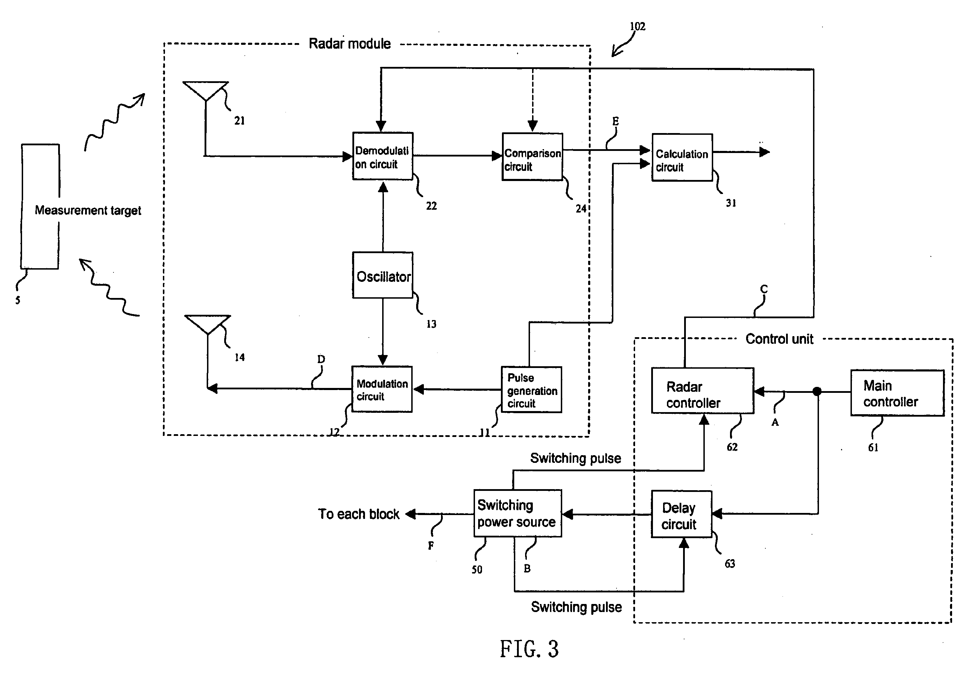

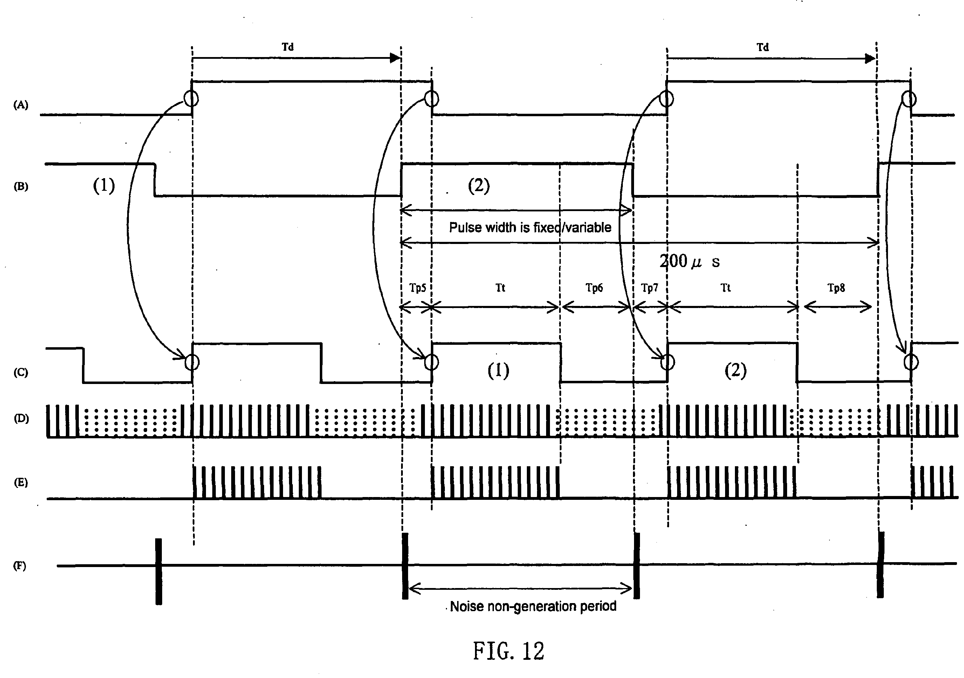

FIG. 3 is an explanatory block diagram of a second embodiment of a pulse radar device related to the present invention, showing a configuration of the pulse radar device. In FIG. 3, the same reference symbols as those of FIG. 1 indicate the same components. In the present embodiment, a control signal output from a control unit is input to a demodulation circuit 22 or a comparison circuit 24, to control operations of a reception unit. In the following, operations of the control unit are described with reference to FIG. 12, FIGS. 12(A), 12(B), 12(C), 12(D), 12(E), and 12(F) each show one example of a signal waveform that appears at points A, B, C, D, E, and F shown in FIG. 3 respectively. In the following description, the reference symbols shown in FIG. 3 are used appropriately.

FIG. 12(A) shows a timing of a reference signal output from a main controller 61. FIG. 12(B) shows a timing of a switching pulse generated in a switching power source 50. The switching pulse is generated by inputting a pulse signal output from a delay circuit 63 to a generator 52 in a switching pulse generation circuit 51 described with FIG. 7. FIG. 12(C) shows a timing of the control signal controlling operations of the demodulation circuit 22 or the comparison circuit 24. FIG. 12(D) shows a timing of a transmitted pulse wave transmitted from a transmitting antenna 14. FIG. 12(E) shows a timing of a received pulse output from the comparison circuit 24. FIG. 12(F) shows a timing of occurrence of noise which is added to an output voltage provided by the switching power source 50.

As shown in FIG. 12(F), on the rising edge or the trailing edge of a switching pulse as shown in FIG. 12(B), high frequency noise is added to an output of the switching power source 50 owing to ringing of the switching pulse. The noise occurs like impulse roughly simultaneously with the rising or the falling. Accordingly, the control unit controls operations of the reception unit so that it may output such a received pulse that a process from transmission of a transmitted pulse wave to generation of a received pulse has been completed in a period during which the switching pulse is in an on-state except a predetermined period measured from the rising of the switching pulse or a period during which the switching pulse is in an off-state except the predetermined period measured from the trailing of the switching pulse.

In the present embodiment, operation control is conducted on the reception unit so that the comparison circuit 24 may output a received pulse only in a reception period Tt during which the control signal shown in FIG. 12(C) is in the on-state by raising this control signal in level only over the reception period Tt in a noise non-generation period shown in FIG. 12(F). Further, before and after the reception period Tt in timing, predetermined periods Tp5 and Tp6 are provided to pulse (1) respectively and predetermined periods Tp7 and Tp8 are provided to pulse (2) respectively in FIG. 12(C). The periods Tp5 and Tp7 each include a predetermined period shown in FIG. 12(F) till the noise stops to influence on the radar module. However, there are some cases where the noise shown in FIG. 12(F) may be added to a transmitted pulse wave to be transmitted at the beginning of the reception period Tt even if generation of a received pulse is completed within the noise non-generation period. This is because there is a difference in time between a transmission timing of a transmitted pulse wave and a reception timing of a reflected wave. To solve this problem, the predetermined periods Tp1 and Tp2 are determined taking into account the transmission timing of the transmitted pulse wave. That is, the periods Tp5 and Tp7 are each supposed to be larger than a maximum propagation delay time and contain a value of a lapse of time shown in FIG. 12(F) till the noise stops to influence on the radar module. Further, in determination of the predetermined periods Tp5 and Tp7, taking into account a delay time as required between a timing of a transmitted pulse being output from the pulse generation circuit 11 to the calculation circuit 31 and a timing of a transmitted pulse wave being transmitted from the modulation circuit 12, it is preferable to prevent noise from affecting the transmitted pulse to be output from the pulse generation circuit 11 to the calculation circuit 31. Further, the predetermined periods Tp6 and Typ8 have been provided preliminarily to prevent the noise shown in FIG. 12(F) from affecting generation of a received pulse. It is to be noted that in a case where the comparison circuit 24 outputs a received pulse only in the reception period Tt in which the control signal is in the on-state, either demodulation by the demodulation circuit 22 or comparison by the comparison circuit 24 is controlled by the control signal. In a pulse radar device 102 shown in FIG. 3, the demodulation circuit 22 is controlled by the control signal indicated by a solid line. Of course, the comparison circuit 24 may be controlled by the control signal indicated by a broken line. The demodulation circuit 22 and the comparison circuit 24 are so controlled that reception can be stopped if either of them stops operation. Further, of course, the control signal may be input to any one of the demodulation circuit 22 and the comparison circuit 24. Although in the present embodiment, the demodulation circuit 22 or the comparison circuit 24 is stopped in operation if the control signal of FIG. 12(C) is turned off, instead of operating the demodulation circuit 22 or the comparison circuit 24 even if the control signal of FIG. 12(C) is in the off-state, a received pulse generated when it is in the.off-state may be abandoned. Although the present embodiment has transmitted a received pulse several times in the reception period Tt, the received pulse may be generated only once in the reception period Tt.

As can be seen from the above, by equipping the control unit, the reception unit is not affected by high frequency noise when receiving a reflected wave and outputting a received pulse. Further, a reflected wave received by the reception unit has been transmitted in a limited period when the switching pulse is in the on-state or the off-state, during which the transmission unit is not affected by high frequency noise either. Therefore, the pulse radar device 102 related to the present embodiment can be effectively prevented from malfunctioning due to high frequency noise caused by a switching pulse.

In the present embodiment, to provide the predetermined periods Tp5 and Tp7, the control signal from the radar controller 62 is configured to raise as triggered by rising edge and trailing edge of the reference signal as a first timing signal from the main controller 61 and, further, a pulse signal as a second timing signal is configured to be output which is delayed through the delay circuit 63 with respect to the reference signal by at least as much as an execution time of the radar module, that is, a lapse of time that corresponds to the reception period Tt (delayed by Td in FIG. 12). In the present embodiment, a delay time Td is determined so as to fall in a pulse width of the reference signal. Further, the predetermined periods Tp6 and Tp8 are provided by adjusting the reception period Tt by using the radar controller 62.

It is to be noted that in a case where a pulse width of the switching pulse of FIG. 12(B) is fixed, the predetermined periods Tp5, Tp6, Tp7, and Tp8 are determined by adjusting the reception period Tt so that it may fall in the pulse width of the switching pulse. On the other hand, in a case where the pulse width of the switching pulse is made variable by PWM control, when applying a saw tooth wave shown in FIG. 9(H') by using the switching pulse generation circuit 51 shown in FIG. 7, only a trailing time point of the switching pulse is fixed and a pulse width and a rising time point thereof are made variable. Further, when applying a triangular wave shown in FIG. 8(H) by using the switching pulse generation circuit 51 shown in FIG. 7, the rising time point, the trailing time point, and the width of the switching pulse are all made variable. Therefore, in a case where PWM control is conducted on the switching power source 50, as shown in FIG. 3, a switching pulse is input from the switching power source 50 to the radar controller 62 and the delay circuit 63 to reflect a timing of the switching pulse on determination of the reception period Tt of the control signal and determination of the delay time Td of the switching pulse. For example, based on a rising time point and a trailing time point of a previous switching pulse (pulse (1) of FIG. 12(B)), a rising time point and a trailing time point of the coming switching pulse (pulse (2) of FIG. 12(B)) are predicted to thereby determine the reception period Tt and the delay time Td.

By causing the reception unit in the radar module to operate by using the radar controller 62 and also causing the switching pulse to carry put the switching operation by using the delay circuit 63 under the control of the control unit as in the case of the present embodiment, it is possible to control a switching operation of the switching pulse with reference to an operation of the reception unit in the radar module. Therefore, operation timings of the reception unit and the switching pulse are all synchronized, to improve certainty of operations of the pulse radar device 102. Therefore, the pulse radar device 102 related to the present embodiment can be effectively prevented from malfunctioning due to high frequency noise caused by a switching pulse.

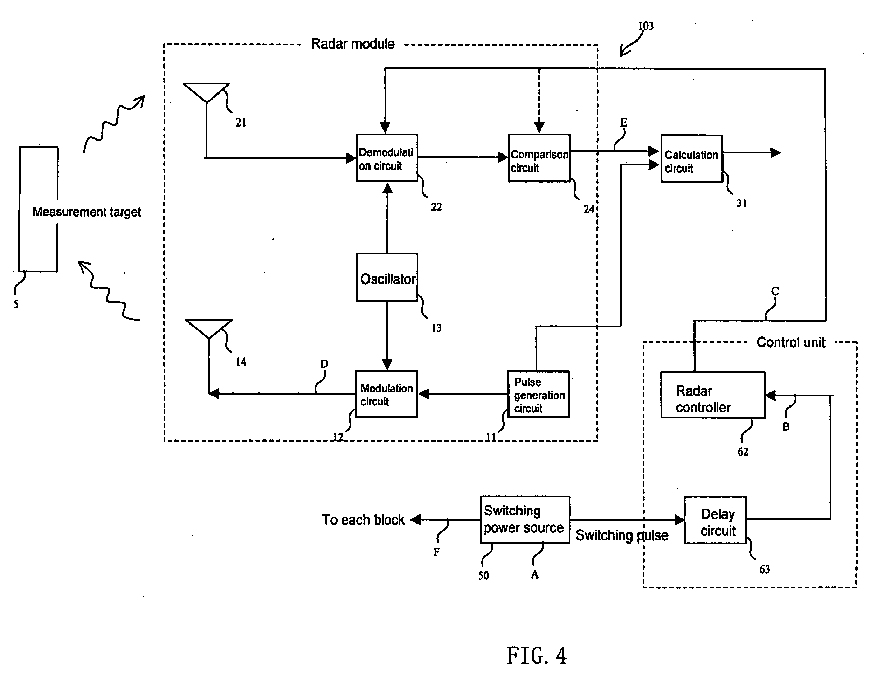

Next, another configuration of a control system of the pulse radar device is described with reference to FIG. 4. The following will describe its form in which the control unit controls operations of the reception unit. In FIG. 4, the same reference symbols indicate the same components as those of FIG. 3. In FIG. 4, the control unit includes the delay circuit 63 and the radar controller 62 as a radar control circuit.

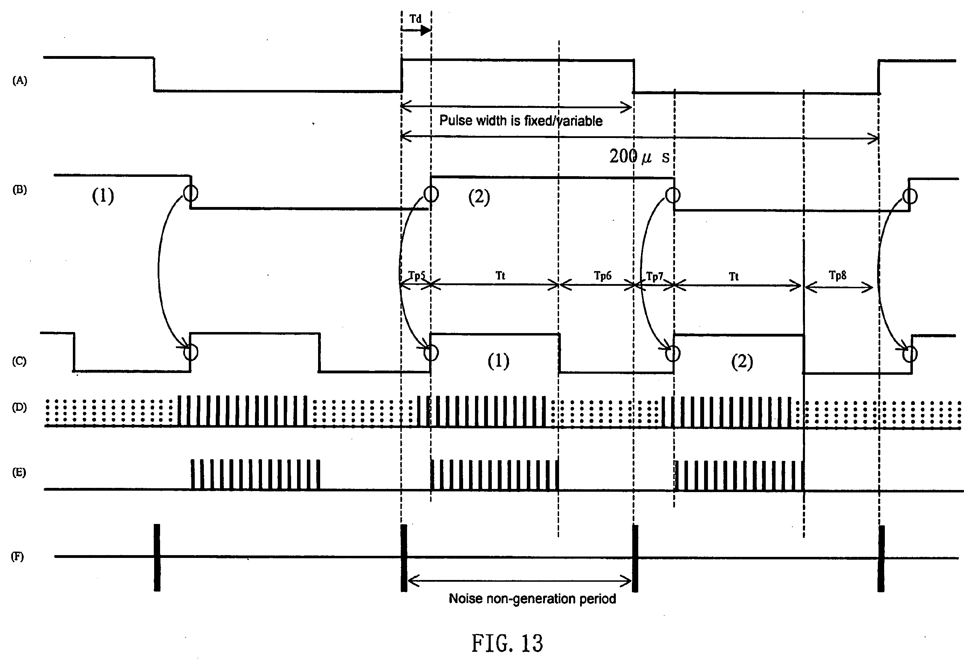

The switching power source 50 generates a switching pulse by using the switching pulse generation circuit 51 described with FIG. 7 and outputs the switching pulse to an outside. In this case, the switching pulse generation circuit 51 shown in FIG. 7 self-excitedly oscillates a triangular wave or a saw tooth wave by using the generator 52. The delay circuit 63 acquires the switching pulse from the switching power source 50, delays it by a predetermined lapse of time, and outputs a resultant pulse signal as a third timing signal. Further, the radar controller 62 as the radar control circuit generates the control signal as a fourth timing signal based on the pulse signal from the delay circuit 63 and outputs it to the demodulation circuit 22 and/or the comparison circuit 24. In a pulse radar device 103 shown in FIG. 4, the demodulation circuit 22 is controlled by the control signal indicated by a solid line. Of course, the comparison circuit 24 may be controlled by the control signal indicated by a broken line or both of the demodulation circuit 22 and the comparison circuit 24 may be controlled by the control signal. In the following, operations of the control unit are described with reference to FIG. 13, FIGS. 13(A), 13(B), 13(C), 13(D), 13(E), and 13(F) each show one example of a signal waveform that appears at points A, B, C, D, E, and F shown in FIG. 4 respectively. In the following description, the reference symbols shown in FIG. 4 are used appropriately.

FIG. 13(A) shows a timing of a switching pulse output from the switching power source 50. FIG. 13(B) shows a timing of a pulse signal output from the delay circuit 63. FIG. 13(C) shows a timing of the control signal controlling operations of the demodulation circuit 22 or the comparison circuit 24. FIG. 13(D) shows a timing of a transmitted pulse wave transmitted from the transmitting antenna 14. FIG. 13(E) shows a timing of a received pulse output from the comparison circuit 24. FIG. 13(F) shows a timing for occurrence of noise which is added to an output voltage provided by the switching power source 50.

In the same way as described with FIG. 12, the control unit controls the operations of the reception unit so that it may output such a received pulse that a process from transmission of a transmitted pulse wave to generation of a received pulse has been completed in a period during which the switching pulse is in an on-state except a predetermined period measured from the rising of the switching pulse or a period during which the switching pulse is in an off-state except the predetermined period measured from the trailing of the switching pulse. It is to be noted that this predetermined period is included in each of the predetermined periods Tp5 and Tp7. Although in the present embodiment, the demodulation circuit 22 or the comparison circuit 24 is stopped in operation if the control signal of FIG. 13(C) is turned off, instead of operating the demodulation circuit 22 or the comparison circuit 24 even if the control signal of FIG. 13(C) is in the off-state, a received pulse generated when it is in the off-state may be abandoned. Although the present embodiment has generated a received pulse several times in the reception period Tt, the received pulse may be generated only once in the reception period Tt.

In the present embodiment, to provide the predetermined periods Tp5 sand Tp7, a switching pulse from the switching power source 50 has been delayed through the delay circuit 63 by the predetermined delay time Td, and the control signal from the radar controller 62 is configured to rise as triggered by rising edge and trailing edge of the pulse signal from the delay circuit 63. Further, the predetermined periods Tp6 and Tp8 have been provided by adjusting the reception period Tt by using the radar controller 62.

In such a manner, the control unit uses the delay circuit 63 and the radar controller 62 to operate the reception unit in the radar module based on a switching pulse, thereby enabling operations of the radar module with reference to a switching operation of the switching pulse. Accordingly, the switching pulse and the reception unit in the radar module are all synchronized in operation timing, to improve the certainty of operations of the pulse radar device 103. Therefore, the pulse radar device 103 related to the present embodiment can be effectively prevented from malfunctioning due to high frequency noise caused by the switching pulse. It is to be noted that in the present embodiment, since the operations of the reception unit are controlled on the basis of a switching pulse, even if a width of the switching pulse is variable, a timing of the switching pulse can be reflected on determination of the delay time Td of the switching pulse and determination of the reception period Tt of the control signal. For example, based on a rising time point and a trailing time point of a previous delayed switching pulse (pulse (1) of FIG. 13(B)), a rising time point and a trailing time point of the coming delayed switching pulse (pulse (2) of FIG. 13(B)) are predicted to thereby determine the reception period Tt and the delay time Td.

The following will describe operations of the pulse radar devices 102 and 103 with reference to FIGS. 3, 4, 7, 12, and 13. In the following description, the reference symbols shown in FIGS. 3, 4, 7, 12, and 13 are used appropriately.

In the pulse radar device 102 shown in FIG. 3, first, when the switching power source 50 is powered, the switching power source 50 performs self-excited oscillation upon power application to supply power to an entirety of the pulse radar device 102. A reference signal output from the main controller 61 in the control unit thus supplied with power is delayed through the delay circuit 63 by the predetermined delay time Td (FIG. 12) and input to the switching power source 50. This delay time is determined so as to fall in a pulse width of the reference signal. Based on a pulse signal input to the switching pulse generation circuit 51 from the delay circuit 63, the switching power source 50 generates a switching pulse shown in FIG. 12(B), thus operating.

On the other hand, the reference signal output from the main controller 61 is input to the radar controller 62. The radar controller 62 raises the control signal in level as shown in FIG. 12(C) as triggered by rising edge and trailing edge of the reference signal and outputs it by adjusting the reception period Tt so that such a received pulse may be output that a process from transmission of a transmitted pulse wave to generation of a received pulse has been completed in a period during which the switching pulse is in an on-state except a predetermined period measured from the rising of the switching pulse or a period during which the switching pulse is in an off-state except a predetermined period measured from the trailing of the switching pulse. It is to be noted that this predetermined period is included in each of the predetermined periods Tp5 and Tp7. In this case, in a case where the pulse width of the switching pulse is variable, the reception period Tt can be determined by predicting a rising time point and a trailing time point of a coming switching pulse (pulse (1) of FIG. 12(B)) based on a rising time point and a trailing time point of a previous switching pulse (pulse (2) of FIG. 12(B)).

On the other hand, in the pulse radar device 103 shown in FIG. 4, when the switching power source 50 is powered, the switching power source 50 performs self-excited oscillation upon power application to supply power to the entirety of the pulse radar device 103 through switching of a switching pulse generated by the switching pulse generation circuit 51. Also, the switching power source 50 outputs the switching pulse to the delay circuit 63. The switching pulse output from the switching power source 50 is delayed through the delay circuit 63 by the predetermined delay time Td (FIG. 13) and input to the radar controller 62.

The radar controller 62 raises the control signal in level as shown in FIG. 13(C) as triggered by rising edge and trailing edge of a pulse signal from the delay circuit 63 and outputs it by adjusting the reception period Tt so that such a received pulse may be output that a process from transmission of a transmitted pulse wave to generation of a received pulse has been completed in a period during which the switching pulse is in an on-state except a predetermined period measured from the rising of the switching pulse or a period during which the switching pulse is in an off-state except a predetermined period measured from the trailing of the switching pulse. It is to be noted that this predetermined period is included in each of the predetermined periods Tp5 and Tp7. In this case, in a case where the pulse width of the switching pulse is variable, the reception period Tt can be determined by predicting a rising time point and a trailing time point of a coming switching pulse (pulse (2) of FIG. 13(B)) based on a rising time point and a trailing time point of a previous switching pulse (pulse (1) of FIG. 13(B)).

By generating the control signal as in the case of the pulse radar device 102 or 103, the reception unit is kept free of an influence of high frequency noise when receiving a reflected wave and outputting a received pulse. Further, a reflected wave that is received by the reception unit has been transmitted in a limited period when the switching pulse has been in the on-state or the off-state, during which the transmission unit is also kept free of an influence of high frequency noise. Therefore, the pulse radar devices 102 and 103 related to the present embodiment can be effectively prevented from malfunctioning due to high frequency noise caused by a switching pulse.

When having been supplied with power from the switching power source 50, the transmission unit uses the modulation circuit 12 to modulate a transmitted pulse generated by the pulse generation circuit 11 by using a modulation signal from the oscillator 13, as shown in FIGS. 12(D) and 13(D), and transmits it as a transmitted pulse wave to the measurement target 5 through the transmitting antenna 14 continually. It is to be noted that the pulse generation circuit 11 further outputs the transmitted pulse to the calculation circuit 31.

The transmitted pulse wave transmitted to the measurement target 5 is reflected by the measurement target 5 and received as a reflected wave by the receiving antenna 21. The reception unit, when having received the reflected wave, uses the demodulation circuit 22 to demodulate the received reflected wave by using a demodulation signal from the oscillator 13 and outputs it only when the control signal is in the on-state. Further, the reception unit uses the comparison circuit 24 to compare the pulse demodulated by the demodulation circuit 22 to the reference voltage so that its waveform may be shaped and output a resultant received pulse.

The transmitted pulse and the received pulse are acquired by the calculation circuit 31 in the absence of an influence of high frequency noise due to the switching pulse of the switching power source 50, so that it is possible to accurately calculate a value of at least one of a round-trip propagation time to the measurement target 5, a distance thereto, and a relative speed thereof with respect to the pulse radar device 102 or 103.

As described above, in the pulse radar devices 102 and 103, when a transmitted pulse wave is transmitted, the reception unit is kept free of high frequency noise, and a reflected wave which is received by the reception unit has been transmitted in a limited period when the switching pulse has been in the on-state or the off-state, during which the transmission unit is also kept free of an influence of high frequency noise. Further, in the pulse radar device 102, the control unit uses the radar controller 62 to operate the reception unit in the radar module and also uses the delay circuit 63 to switch a switching pulse, thereby enabling controlling switching operation of the switching pulse based on the operations of the reception unit in the radar module. Accordingly, the reception unit and the switching pulse are all synchronized in operation timing, to improve the certainty of the operations of the pulse radar device 102. On the other hand, in the pulse radar device 103, the control unit uses the delay circuit 63 and the radar controller 62 to operate the reception unit in the radar module based on the switching pulse, thereby enabling controlling the operations of the radar module based on the switching operation of the switching pulse. Accordingly, the switching pulse and the reception unit in the radar module are all synchronized in operation timing, to improve the certainty of the operations of the pulse radar device 103. Therefore, the pulse radar device 102 and 103 related to the present invention can be effectively prevented from malfunctioning due to high frequency noise caused by a switching pulse.

### (Third Embodiment)

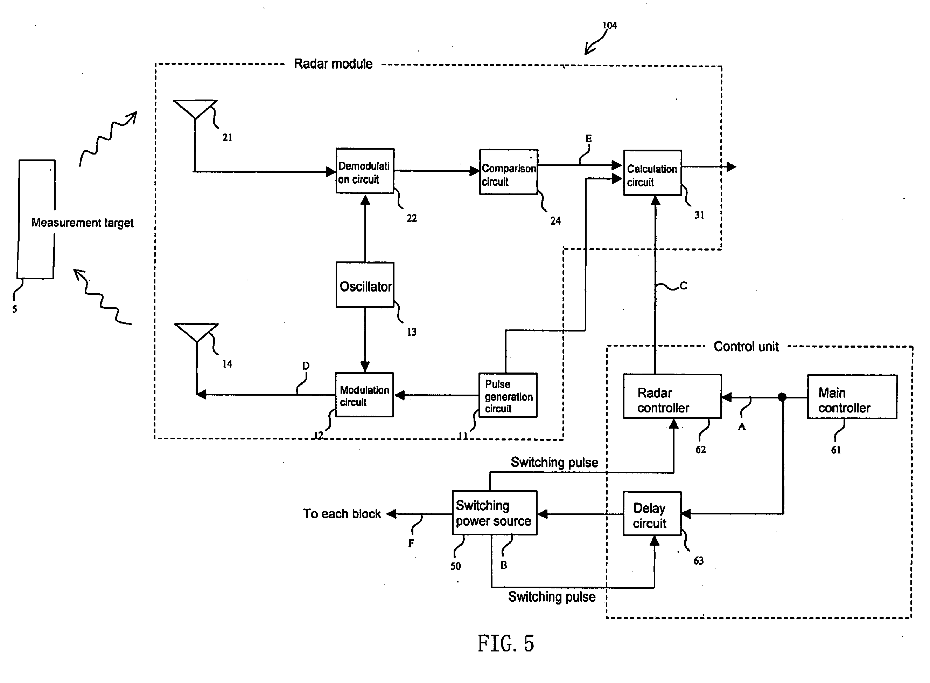

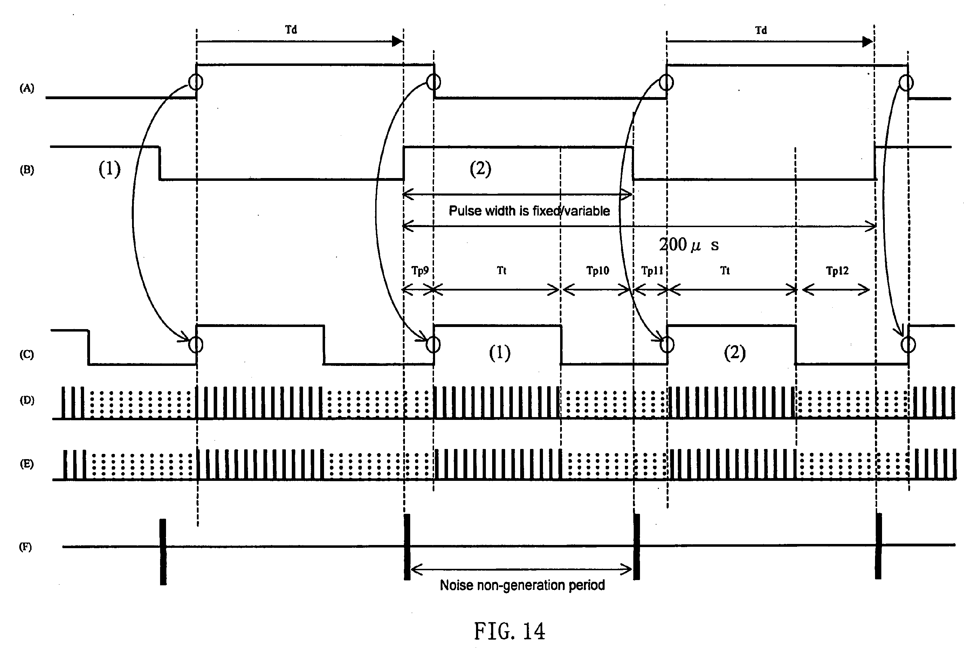

FIG. 5 is an explanatory block diagram of one example of the second embodiment of a pulse radar device related to the present invention, showing a configuration of the pulse radar device. In FIG. 5, the same reference symbols as those of FIG. 1 indicate the same components. In the present embodiment, a control signal output from a control unit is input to a calculation circuit 31, to control operations of a calculation unit. As shown in FIG. 5, a radar module includes the above described transmission unit, reception unit, and calculation unit. In the following, operations of the control unit are described with reference to FIG. 14, FIGS. 14(A), 14(B), 14(C), 14(D), 14(E), and 14(F) each show one example of a signal waveform that appears at points A, B, C, D, E, and F shown in FIG. 5 respectively. In the following description, the reference symbols shown in FIG. 5 are used appropriately.

FIG. 14(A) shows a timing of a reference signal output from a main controller 61. FIG. 14(B) shows a timing of a switching pulse generated in a switching power source 50. The switching pulse is generated by inputting a pulse signal output from a delay circuit 63 to a generator 52 in a switching pulse generation circuit 51 described with FIG. 7. FIG. 14(C) shows a timing of the control signal controlling operations of the calculation circuit 31. FIG. 14(D) shows a timing of a transmitted pulse wave transmitted from a transmitting antenna 14. FIG. 14(E) shows a timing of a received pulse output from the comparison circuit 24. FIG. 14(F) shows a timing of occurrence of noise which is added to an output voltage provided by the switching power source 50.

As shown in FIG. 14(F), on the rising edge or the trailing edge of a switching pulse as shown in FIG. 14(B), high frequency noise is added to an output of the switching power source 50 owing to ringing of the switching pulse. The noise occurs in form of impulse roughly simultaneously with the rising or the trailing. Accordingly, the control unit controls operations of the calculation unit so that it may calculate a value of at least one of a round-trip propagation time to a measurement target 5, a distance thereto, and a relative speed thereof based on such a transmitted pulse wave and such a received pulse that a process from transmission of the transmitted pulse wave to generation of the received pulse has been completed in a period during which the switching pulse is in an on-state except a predetermined period Tp9 measured from the rising of the switching pulse or a period during which the switching pulse is in an off-state except a predetermined period Tp11 measured from the trailing of the switching pulse.

In the present embodiment, operation control is conducted on the calculation circuit 31 so that the calculation circuit 31 may calculate the value only in a calculation period Tt during which the control signal shown in FIG. 14(C) is in the on-state by raising this control signal in level only over the calculation period Tt in a noise non-generation period shown in FIG. 14(F). Further, before and after the calculation period Tt in timing, predetermined periods Tp9 and Tp10 are provided to pulse (1) respectively and predetermined periods Tp11 and Tp12 are provided to pulse (2) respectively in FIG. 14(C). The periods Tp9 and Tp11 each are a predetermined period shown in FIG. 14(F) till the noise stops to influence on the radar module. Further, to determine the predetermined periods Tp9 and Tp11, taking into account a delay time measured between outputting of a transmitted pulse from the pulse generation circuit 11 to the calculation circuit 31 and transmission of a transmitted pulse wave from the modulation circuit 12 as required, it is preferable to prevent noise from affecting the transmitted pulse which is sent from the pulse generation circuit 11 to the calculation circuit 31. Further, the predetermined periods Tp10 and Tp12 have been provided preliminarily to prevent the noise shown in FIG. 14(F) from affecting generation of a received pulse. Although in the present embodiment, operation of the calculation circuit 31 is stopped if the control signal of FIG. 14(C) is turned off, instead of operating the calculation circuit 31 even if the control signal of FIG. 14(C) is in the off-state, a transmitted pulse and a received pulse which are output when it is in the off-state may be abandoned. Although the present embodiment has transmitted a received pulse and received a received pulse several times respectively in the calculation period Tt, the transmitted pulse and the received pulse may be generated and received respectively only once in the calculation period Tt.

As can be seen from the above, by providing with the control unit, the calculation unit is not affected by high frequency noise when calculating a value of at least one of a round-trip propagation time, a distance, and a relative speed. Further, a transmitted pulse and a receive pulse that provide a reference for calculation by the calculation unit are transmitted and generated respectively in a limited period when a switching pulse is in the on-state or the off-state, during which neither the transmission unit nor the reception unit is affected by high frequency noise. Therefore, a pulse radar device 104 related to the present embodiment can be effectively prevented from malfunctioning due to high frequency noise caused by a switching pulse. Further, in the pulse radar device 104 related to the present embodiment, a value of a round-trip propagation time, a distance, and a relative speed is calculated by the calculation unit in the absence of an influence of high frequency noise caused by a switching pulse. It is thus possible to obtain a highly accurate value.

In the present embodiment, to provide the predetermined periods Tp9 and Tp11, the control signal from a radar controller 62 is configured to rise as triggered by rising edge and trailing edge of the reference signal as a first timing signal from the main controller 61 and, further, a pulse signal as a second timing signal is configured to be output which is delayed through the delay circuit 63 with respect to the reference signal by at least as much as an execution time of the radar module, that is, a lapse of time that corresponds to the calculation period Tt (delayed by Td in FIG. 14). In the present embodiment, a delay time Td is determined so as to fall in a pulse width of the reference signal. Further, the predetermined periods Tp10 and Tp12 are provided by adjusting the calculation period Tt by using the radar controller 62.

It is to be noted that in a case where a pulse width of the switching pulse of FIG. 14(B) is fixed, the predetermined periods Tp9, Tp10, Tp11, and Tp12 are determined by adjusting the calculation period Tt so that it may fall in the pulse width of the switching pulse. On the other hand, in a case where the pulse width of the switching pulse is made variable by PWM control, when applying a saw tooth wave shown in FIG. 9(H') by using the switching pulse generation circuit 51 shown in FIG. 7, only a trailing time point of the switching pulse is fixed and a pulse width and a rising time point thereof are made variable. Further, when applying a triangular wave shown in FIG. 8(H) by using the switching pulse generation circuit 51 shown in FIG. 7, the rising time point, the trailing time point, and the width of the switching pulse are all made variable. Therefore, in a case where PWM control is conducted on the switching power source 50, as shown in FIG. 5, a switching pulse is input from the switching power source 50 to the radar controller 62 and the delay circuit 63 to reflect a timing of the switching pulse on determination of the calculation period Tt of the control signal and determination of the delay time Td of the switching pulse. For example, based on a rising time point and a trailing time point of a previous switching pulse (pulse (1) of FIG. 14(B)), a rising time point and a trailing time point of the coming switching pulse (pulse (2) of FIG. 14(B)) are predicted to thereby determine the calculation period Tt and the delay time Td.

By causing the calculation unit in the radar module to operate by using the radar controller 62 and also causing the switching pulse to switch by using the delay circuit 63 under the control of the control unit as in the case of the present embodiment, it is possible to control a switching operation of the switching pulse with reference to an operation of the calculation unit in the radar module. Therefore, operation timings of the calculation unit and the switching pulse are all synchronized, to improve certainty of operations of the pulse radar device 104. Therefore, the pulse radar device 104 related to the present embodiment can be effectively prevented from malfunctioning due to high frequency noise caused by a switching pulse.

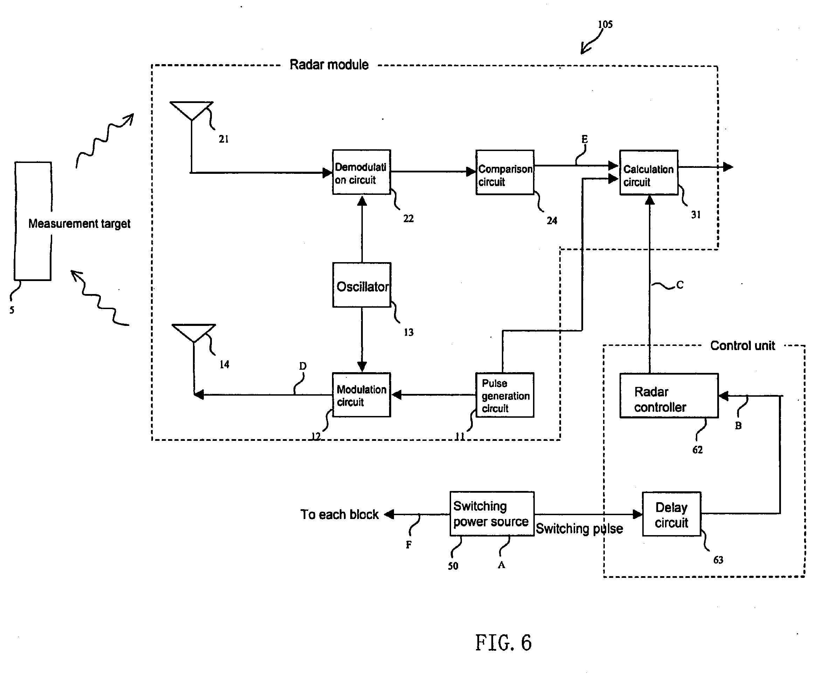

Next, another configuration of a control system of the pulse radar device is described with reference to FIG. 6. In the following, a form is described in which the control unit controls operations of the calculation unit. In FIG. 6, the same reference symbols as those of FIG. 5 indicate the same components. In FIG. 6, the control unit includes the delay circuit 63 and the radar controller 62 as a radar control circuit.

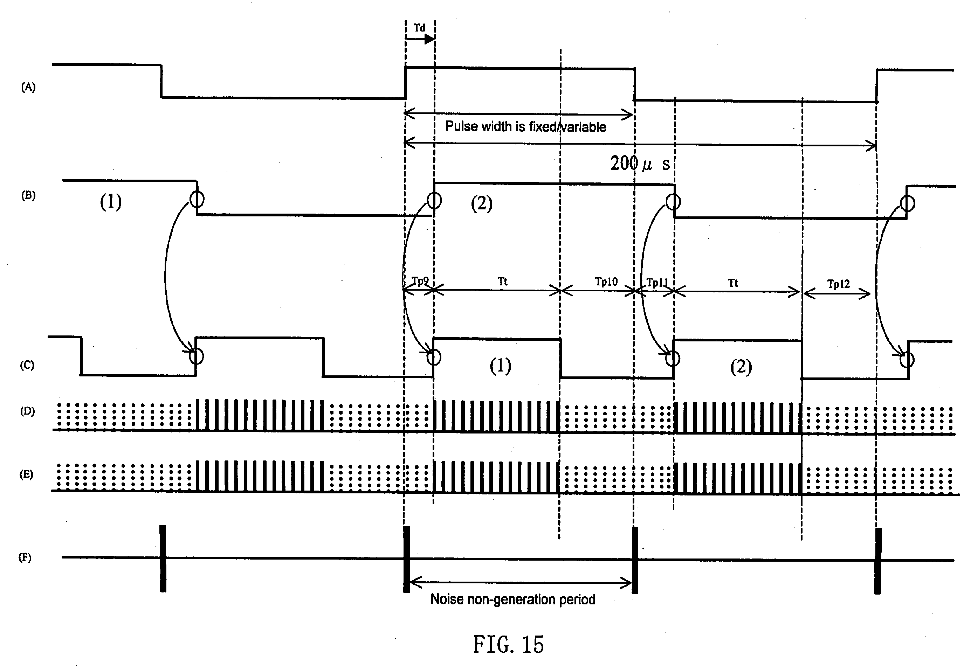

The switching power source 50 generates a switching pulse by using the switching pulse generation circuit 51 described with FIG. 7 and outputs the switching pulse to an outside. In this case, the switching pulse generation circuit 51 shown in FIG. 7 self-excitedly oscillates a triangular wave or a saw tooth wave by using the generator 52. The delay circuit 63 acquires the switching pulse from the switching power source 50, delays it by a predetermined lapse of time, and outputs a resultant pulse signal as a third timing signal. Further, the radar controller 62 as the radar control circuit generates the control signal as a fourth timing signal based on the pulse signal from the delay circuit 63 and outputs it to the calculation circuit 31. In the following, operations of the control unit are described with reference to FIG. 15, FIGS. 15(A), 15(B), 15(C), 15(D), 15(E), and 15(F) each show one example of a signal waveform that appears at points A, B, C, D, E, and F shown in FIG. 6 respectively. In the following description, the reference symbols shown in FIG. 6 are used appropriately.

FIG. 15(A) shows a timing of a switching pulse output from the switching power source 50. FIG. 15(B) shows a timing of a pulse signal output from the delay circuit 63. FIG. 15(C) shows a timing of the control signal controlling operations of the calculation circuit 31. FIG. 15(D) shows a timing of a transmitted pulse wave transmitted from the transmitting antenna 14. FIG. 15(E) shows a timing of a received pulse output from the comparison circuit 24. FIG. 15(F) shows a timing for occurrence of noise which is added to an output voltage provided by the switching power source 50.

In the same way as described with FIG. 14, the control unit controls the operations of the calculation unit so that it may calculate a value of at least one of a round-trip propagation time to a measurement target 5, a distance thereto, and a relative speed thereof based on such a transmitted pulse wave and such a received pulse that a process from transmission of the transmitted pulse wave to generation of the received pulse has been completed in a period during which the switching pulse is in an on-state except a predetermined period Tp9 measured from the rising of the switching pulse or a period during which the switching pulse is in an off-state except a predetermined period Tp11 measured from the trailing of the switching pulse. Although in the present embodiment, the calculation circuit 31 is stopped in operation if the control signal of FIG. 15(C) is turned off, instead of operating the calculation circuit 31 even if the control signal of FIG. 15(C) is in the off-state, a transmitted pulse and a received pulse generated when it is in the off-state may be abandoned. Although the present embodiment has transmitted a transmitted pulse wave and generated a received pulse several times respectively in the calculation period Tt, the transmitted pulse wave may be transmitted and the received pulse may be generated only once in the calculation period Tt.

In the present embodiment, to provide the predetermined periods Tp9 sand Tp11, a switching pulse from the switching power source 50 has been delayed through the delay circuit 63 by the predetermined delay time Td, and the control signal from the radar controller 62 is configured to rise as triggered by rising edge and trailing edge of the pulse signal from the delay circuit 63. Further, the predetermined periods Tp10 and Tp12 have been provided by adjusting the calculation period Tt by using the radar controller 62.

In such a manner, the control unit uses the delay circuit 63 and the radar controller 62 to operate the calculation unit in the radar module based on a switching pulse, thereby enabling operations of the radar module with reference to a switching operation of the switching pulse. Accordingly, the switching pulse and the calculation unit in the radar module are all synchronized in operation timing, to improve the certainty of operations of the pulse radar device 105. Therefore, the pulse radar device 105 related to the present embodiment can be effectively prevented from malfunctioning due to high frequency noise caused by the switching pulse. It is to be noted that in the present embodiment, since the operations of the calculation unit are controlled on the basis of a switching pulse, even if a width of the switching pulse is variable, a timing of the switching pulse can be reflected on determination of the delay time Td of the switching pulse and determination of the calculation period Tt of the control signal. For example, based on a rising time point and a trailing time point of a previous delayed switching pulse (pulse (1) of FIG. 15(B)), a rising time point and a trailing time point of the coming delayed switching pulse (pulse (2) of FIG. 15(B)) are predicted to thereby determine the calculation period Tt and the delay time Td.

The following will describe operations of the pulse radar devices 104 and 105 with reference to FIGS. 5, 6, 7, 14, and 15. In the following description, the reference symbols shown in FIGS. 5, 6, 7, 14, and 15 are used appropriately.

In the pulse radar device 104 shown in FIG. 5, first, when the switching power source 50 is powered, the switching power source 50 performs self-excited oscillation upon power application to supply power to an entirety of the pulse radar device 104. A reference signal output from the main controller 61 in the control unit thus supplied with power is delayed through the delay circuit 63 by the predetermined delay time Td (FIG. 14) and input to the switching power source 50. This delay time is determined so as to fall in a pulse width of the reference signal. Based on a pulse signal input to the switching pulse generation circuit 51 from the delay circuit 63, the switching power source 50 generates a switching pulse shown in FIG. 14(B), thus operating.

On the other hand, the reference signal output from the main controller 61 is input to the radar controller 62. The radar controller 62 raises the control signal in level as shown in FIG. 14(C) as triggered by rising edge and trailing edge of the reference signal and outputs it by adjusting the calculation period Tt so that a value of at least one of a round-trip propagation time to a measurement target 5, a distance thereto, and a relative speed thereof may be calculated on the basis of such a transmitted pulse wave and such a received pulse that a process from transmission of the transmitted pulse wave to generation of the received pulse has been completed in a period during which the switching pulse is in an on-state except a predetermined period Tp9 measured from the rising of the switching pulse or a period during which the switching pulse is in an off-state except a predetermined period Tp11 measured from the trailing of the switching pulse. It is to be noted that in a case where the pulse width of the switching pulse is variable, the calculation period Tt can be determined by predicting a rising time point and a trailing time point of a coming switching pulse (pulse (2) of FIG. 14(B)) based on a rising time point and a trailing time point of a previous switching pulse (pulse (1) of FIG. 14(B)).

On the other hand, in the pulse radar device 105 shown in FIG. 6, when the switching power source 50 is powered, the switching power source 50 performs self-excited oscillation upon power application to supply power to the entirety of the pulse radar device 105 through switching of a switching pulse generated by the switching pulse generation circuit 51. Also, the switching power source 50 outputs the switching pulse to the delay circuit 63. The switching pulse output from the switching power source 50 is delayed through the delay circuit 63 by the predetermined delay time Td (FIG. 15) and input to the radar controller 62.

The radar controller 62 raises the control signal in level as shown in FIG. 15(C) as triggered by rising edge and trailing edge of a pulse signal from the delay circuit 63 and outputs it by adjusting the calculation period Tt so that a value of at least one of a round-trip propagation time to a measurement target 5, a distance thereto, and a relative speed thereof may be calculated on the basis of such a transmitted pulse wave and such a received pulse that a process from transmission of the transmitted pulse wave to generation of the received pulse has been completed in a period during which the switching pulse is in an on-state except a predetermined period Tp9 measured from the rising of the switching pulse or a period during which the switching pulse is in an off-state except a predetermined period Tp11 measured from the trailing of the switching pulse. It is to be noted that in a case where the pulse width of the switching pulse is variable, the calculation period Tt can be determined by predicting a rising time point and a trailing time point of a coming switching pulse (pulse (2) of FIG. 15(B)) based on a rising time point and a trailing time point of a previous switching pulse (pulse (1) of FIG. 15(B)).

By generating the control signal as in the case of the pulse radar device 104 or 105, the calculation unit is kept free of an influence of high frequency noise when calculating a value of a round-trip propagation time, a distance, and a relative speed. Further, a transmitted pulse wave and a received pulse that provide a reference for calculation by the calculation unit are transmitted and generated respectively in a limited period when the switching pulse is in the on-state or the off-state, during which either the transmission unit nor the reception unit is affected by high frequency noise. Therefore, the pulse radar devices 104 and 105 related to the present embodiment can be effectively prevented from malfunctioning due to high frequency noise caused by a switching pulse.

When having been supplied with power from the switching power source 50, the transmission unit uses the modulation circuit 12 to modulate a transmitted pulse generated by the pulse generation circuit 11 by using a modulation signal from an oscillator 13, as shown in FIGS. 14(D) and 15(D), and transmits it as a transmitted pulse wave to the measurement target 5 through the transmitting antenna 14 continually. It is to be noted that the pulse generation circuit 11 further outputs the transmitted pulse to the calculation circuit 31.

The transmitted pulse wave transmitted to the measurement target 5 is reflected by the measurement target 5 and received as a reflected wave by the receiving antenna 21. As receiving the reflected wave continually, the reception unit demodulates the received reflected wave through the demodulation circuit 22 by using a demodulation signal from the oscillator 13 and outputs it. Further, the reception unit uses the comparison circuit 24 to compare the pulse demodulated by the demodulation circuit 22 to a reference voltage so that its waveform may be shaped and output a resultant received pulse.

The transmitted pulse and the received pulse are acquired by the calculation circuit 31 only when the control signal is in the on-state. The calculation circuit 31 calculates a value of at least one of a round-trip propagation time to the measurement target, a distance thereto, and a relative speed thereof with respect to the pulse radar device 104 or 105 based on the acquired transit pulse and received pulse.

As described above, in the pulse radar devices 104 and 105, when calculating a value of at least one of a round-trip propagation time, a distance thereto, and a relative speed thereof, the calculation unit is kept free of high frequency noise. Further, a transmitted pulse wave and a received pulse that provide a reference for calculation by the calculation unit are transmitted and generated respectively in a limited period when the switching pulse is in the on-state or the off-state, during which either the transmission unit nor the reception unit is affected by high frequency noise. Further, in the pulse radar device 104, the control unit uses the radar controller 62 to operate the calculation unit in the radar module and also uses the delay circuit 63 to carry put the switching operation of a switching pulse, thereby enabling controlling switching operation of the switching pulse based on the operations of the calculation unit in the radar module. Accordingly, the calculation unit and the switching pulse are all synchronized in operation timing, to improve the certainty of the operations of the pulse radar device 104. On the other hand, in the pulse radar device 105, the control unit uses the delay circuit 63 and the radar controller 62 to operate the calculation unit in the radar module based on the switching pulse, thereby enabling performing the operations of the radar module based on the switching operation of the switching pulse. Accordingly, the switching pulse and the calculation unit in the radar module are all synchronized in operation timing, to improve the certainty of the operations of the pulse radar device 105. Therefore, the pulse radar device 104 and 105 related to the present invention can be effectively prevented from malfunctioning due to high frequency noise caused by a switching pulse.

A pulse radar device of the present invention can be installed in a vehicle to avoid its collision or for automatic cruising and also used as a fixed pulse radar device.

## Claims

1. A pulse radar device comprising:
a radar module (100) that includes a transmission unit (11, 12, 14) which transmits a transmitted pulse wave obtained by modulating a transmitted pulse and a reception unit (21, 22, 24) which receives a reflected wave of the transmitted pulse wave reflected by a measurement target (5) and demodulates the reflected wave to thereby generate a received pulse (E);
a switching power source (50) which generates drive power for the radar module (100) by switching DC power by turning a switching pulse on and off;
**characterized by**
a control unit comprising a timing generation circuit (61) which generates a first timing signal (A) that causes the radar module (100) to operate periodically, and
a delay circuit (63) which outputs a second timing signal (B) which is delayed from the first timing signal (A) by less than a pulse width of the first timing signal, and such that the switching pulse in the switching power source (50) is switched in response to the second timing signal (B), and the control unit is further adapted to control operation of the radar module (100) so that a process from transmission of the transmitted pulse wave to generation of the received pulse may be completed in a period during which the switching pulse is in an on-state or an off-state except a predetermined first period of time (Tp9, Tp11) measured from a rising edge of the switching pulse and a second period of time (Tp10, Tp12) measured from a corresponding trailing edge of the switching pulse.

2. The pulse radar device according to claim 1,
wherein the radar module (100) further comprises a calculation unit (31) which calculates a value of at least one of a round-trip propagation time to the measurement target (5), a distance to the measurement target (5), and a relative speed of the measurement target (5) based on the transmitted pulse transmitted from the transmission unit (11, 12, 14) and the received pulse output from the reception unit (21, 22, 24).

3. The pulse radar device according to claim 1 or 2, wherein the control unit comprises:
a delay circuit (63) which acquires the switching pulse from the switching power source (50) and delays the switching pulse by a predetermined delay to output a resultant third timing signal; and
a radar control circuit (62) which generates a fourth timing signal(C) that causes the radar module (100) to operate based on the third timing signal.

## Patentansprüche

1. Impulsradargerät mit:
einem Radarmodul (100), das eine Sendeeinheit (11, 12, 14), die eine durch Modulieren eines gesendeten Impulses erhaltene, gesendete Impulswelle sendet, und eine Empfangseinheit (21, 22, 24) aufweist, die eine reflektierte Welle der gesendeten Impulswelle empfängt, die von einem Meßziel (5) reflektiert wird, und die reflektierte Welle demoduliert, um dadurch einen empfangenen Impuls (E) zu erzeugen,
einer Schaltstromquelle (50), die durch Schalten eines Gleichstroms eine Ansteuerleistung für das Radarmodul (100) erzeugt, indem sie einen Schaltimpuls ein- und ausschaltet,
**gekennzeichnet durch**
eine Steuereinheit mit einer Taktgeberschaltung (61), die ein erstes Taktsignal (A) erzeugt, welches bewirkt, daß das Radarmodul (100) periodisch arbeitet, und
eine Verzögerungsschaltung (63), die ein zweites Taktsignal (B) abgibt, das bezüglich des ersten Taktsignals (A) um weniger als eine Impulsbreite des ersten Taktsignals und so verzögert ist, daß der Schaltimpuls in der Schaltstromquelle (50) als Reaktion auf das zweite Taktsignal (B) geschaltet wird, und wobei die Steuereinheit ferner den Betrieb des Radarmoduls (100) so steuern kann, daß ein Vorgang ab der Übertragung der gesendeten Impulswelle bis zur Erzeugung des empfangenen Impulses in einem Zeitraum abgeschlossen werden kann, in dem der Schaltimpuls in einem Ein- oder einem Aus-Zustand ist, abgesehen von einer vorbestimmten, ab einer ansteigenden Flanke des Schaltimpulses gemessenen ersten Zeitdauer (Tp9, Tp11) und einer ab einer entsprechenden abfallenden Flanke des Schaltimpulses gemessenen zweiten Zeitdauer (Tp10, Tp12).

2. Impulsradargerät gemäß Anspruch 1,
bei dem das Radarmodul (100) ferner eine Berechnungseinheit (31) umfaßt, die anhand des von der Sendeeinheit (11, 12, 14) übertragenen, gesendeten Impulses und des von der Empfangseinheit (21, 22, 24) abgegebenen, empfangenen Impulses einen Wert einer Umlaufzeit zum Meßziel (5) und/oder eines Abstands vom Meßziel (5) und/oder einer relativen Geschwindigkeit des Meßziels (5) berechnet.

3. Impulsradargerät gemäß Anspruch 1 oder 2, bei dem die Steuereinheit folgendes umfaßt:
eine Verzögerungsschaltung (63), die den Schaltimpuls von der Schaltstromquelle (50) erfaßt und den Schaltimpuls zur Abgabe eines resultierenden dritten Taktsignals um eine vorbestimmte Verzögerung verzögert, und
eine Radarsteuerschaltung (62), die ein viertes Taktsignal (C) erzeugt, das bewirkt, daß das Radarmodul (100) aufgrund des dritten Taktsignals arbeitet.

## Revendications

1. Appareil radar à impulsions, comportant :
un module radar (100) présentant une unité d'émission (11, 12, 14) émettant une onde à impulsion émise et obtenue par modulation d'une impulsion émise, et une unité de réception (21, 22, 24) qui reçoit une onde réfléchie de l'onde à impulsion émise, réfléchie par une cible de mesure (5), et démodule l'onde réfléchie pour ainsi générer une impulsion reçue (E) ;
une source de courant de commutation (50) qui génère, par commutation d'une puissance en courant continu, une puissance d'actionnement pour le module radar (100) en déclenchant et coupant une impulsion de commutation ;
**caractérisé par**
une unité de commande présentant un circuit temporisateur (61) qui génère un premier signal de temporisation (A) provoquant un fonctionnement périodique du module radar (100), et
un circuit de retardement (63) qui émet un deuxième signal de temporisation (B) qui, par rapport au premier signal de temporisation (A), est retardé de moins d'une largeur d'impulsion par rapport au premier signal de temporisation et de telle sorte que l'impulsion de commutation dans la source de courant de commutation (50) est commutée en réponse au deuxième signal de temporisation (B), et l'unité de commande étant en outre adaptée à commander le fonctionnement du module radar (100) de sorte qu'une procédure à partir de l'émission de l'onde à impulsion émise, jusqu'à la génération de l'impulsion reçue puisse être accomplie en une période durant laquelle l'impulsion de commutation est dans un état déclenché ou dans un état coupé, à l'exception d'un premier laps de temps (Tp9, Tp11) prédéterminé, mesuré à partir d'un flanc montant de l'impulsion de commutation, et d'un deuxième laps de temps (Tp10, Tp12) mesuré à partir d'un flanc arrière correspondant de l'impulsion de commutation.

2. Appareil radar à impulsions selon la revendication 1,
dans lequel le module radar (100) présente en outre une unité de calcul (31) qui calcule une valeur d'un temps de propagation aller-retour vers la cible de mesure (5) et/ou une distance par rapport à la cible de mesure (5) et/ou une vitesse relative de la cible de mesure (5) sur la base de l'impulsion émise qui est émise par l'unité d'émission (11, 12, 14), et de l'impulsion reçue émise par l'unité de réception (21, 22, 24).

3. Appareil radar à impulsions selon la revendication 1 ou 2, dans lequel l'unité de commande comporte :
un circuit de retardement (63) qui détecte l'impulsion de commutation de la source de courant de commutation (50) et retarde l'impulsion de commutation d'un retard prédéterminé pour fournir un troisième signal de temporisation résultant ; et
un circuit de commande radar (62) qui génère un quatrième signal de temporisation (C) provoquant le fonctionnement du module radar (100) sur la base du troisième signal de temporisation.
